# EUROPEAN PATENT SPECIFICATION

(11) **EP 4 613 577 B1**
(45) Date of publication and mention of the grant of the patent: **23.09.2026**
(21) Application number: 22964805.0
(22) Date of filing: 10.11.2022
(51) Int. Cl.: B60T 8/17, B60T 13/74

(54) **METHOD AND APPARATUS FOR CONTROLLING BRAKE SYSTEM**
VERFAHREN UND VORRICHTUNG ZUR STEUERUNG EINES BREMSSYSTEMS
PROCÉDÉ ET APPAREIL DE COMMANDE DE SYSTÈME DE FREIN

(43) Date of publication of application: 10.09.2025
(73) Proprietor: Yinwang Intelligent Technologies Co., Ltd., Shenzhen, Guangdong 518129 (CN)
(72) Inventor: YANG, Weimiao, Shenzhen, Guangdong 518129 (CN); ZHANG, Yongsheng, Shenzhen, Guangdong 518129 (CN); JIN, Biao, Shenzhen, Guangdong 518129 (CN); LIU, Donghao, Shenzhen, Guangdong 518129 (CN); ZHANG, Yu, Shenzhen, Guangdong 518129 (CN)
(74) Representative: Pfenning, Meinig & Partner mbB
(86) International application number: PCT/CN2022/131180
(87) International publication number: WO 2024/098335

(56) References cited:
- EP-B1- 1 752 351
- CN-A- 110 962 815
- CN-A- 112 572 380
- CN-A- 113 085 825
- CN-A- 113 525 320
- CN-A- 115 175 836
- DE-A1- 102013 227 065
- DE-A1- 102021 108 523
- US-A1- 2014 203 626

## Description

### TECHNICAL FIELD

Embodiments of this application relate to the field of intelligent driving, and more specifically, to a control method and apparatus for a braking system.

### BACKGROUND

A braking system of a vehicle is a system that performs forced braking on the vehicle to some extent by applying a specific braking force to wheels of the vehicle. With development of electric and intelligent vehicles, a requirement for a vehicle braking system is increasingly high. For example, with further development of autonomous driving technologies, dependence of running of a braking system on a driver is reduced, making a requirement for redundancy performance of the braking system increasingly high. When an apparatus in the braking system fails, redundancy performance of the braking system is insufficient, which affects use of the braking system. If a plurality of apparatuses are disposed in the braking system to improve redundancy performance of the braking system, the braking system is excessively heavy and costly. How to set a redundant solution for a braking system properly is an issue to be resolved.
DE 10 2021 108523 A1 relates to a braking system in an at least partially autonomous vehicle, having one vehicle wheel brake per vehicle wheel and having a primary brake regulation system and a redundant secondary brake regulation system. One hydraulic actuator for actuating the vehicle brake is provided per vehicle wheel in a first vehicle axle which actuator is assigned to both the primary brake regulation system and also the secondary brake regulation system. One electromechanical primary actuator per vehicle wheel is assigned to the primary brake regulation system in the second vehicle axle and one electromechanical secondary actuator is assigned to the secondary brake regulation system.

### SUMMARY

Embodiments of this application provide a control method and apparatus for a braking system, so that implementation of a brake function can be ensured at low costs when an apparatus in a primary braking subsystem of the braking system is faulty, to improve braking safety.

According to a first aspect, a control method for a braking system is provided. The control method may be performed by a vehicle provided with the braking system, may be performed by a controller for the braking system, or may be performed by the braking system. This is not limited in embodiments of this application.

The braking system may include a primary braking subsystem and an auxiliary braking subsystem, and the primary braking subsystem is controlled by a first control unit. The method may include: obtaining a working status of the first control unit and the primary braking subsystem; and when the working status indicates that the first control unit works normally and an apparatus in the primary braking subsystem is faulty, controlling, by using the first control unit, an apparatus other than the faulty apparatus in the primary braking subsystem to adjust pressure of brake fluid in a brake wheel cylinder.

In this embodiment of this application, when the first control unit is normal and an apparatus in the primary braking subsystem is faulty, the pressure of the brake fluid in the brake wheel cylinder is adjusted by using an apparatus other than the faulty apparatus in the primary braking subsystem, so that implementation of a basic brake function and a dynamics function can be ensured at low costs, to improve braking safety.

With reference to the first aspect, in some implementations of the first aspect, the braking system is in a driver braking mode, the primary braking subsystem includes a first sensor, the auxiliary braking subsystem includes a second sensor, and the first sensor and the second sensor are configured to obtain braking force requirement information of a driver. The method may further include: determining information about a braking force based on the braking force requirement information obtained by the second sensor. The controlling, by using the first control unit, an apparatus other than the faulty apparatus in the primary braking subsystem to adjust pressure of brake fluid in a brake wheel cylinder may include: when the working status indicates that the first sensor is faulty, controlling, based on the information about the braking force by using the first control unit, an apparatus other than the first sensor in the primary braking subsystem to adjust the pressure.

In this embodiment of this application, when the braking system is in a driver operation mode, and the first sensor in the primary braking subsystem is faulty, a normal apparatus in the primary braking subsystem may be controlled, based on the braking force requirement information of the driver obtained by the second sensor in the auxiliary braking subsystem and by using the first control unit, to adjust the pressure of the brake fluid in the brake wheel cylinder. In this way, an apparatus in a normal state in the primary braking subsystem can be fully utilized to implement a function supported by the braking system, and braking safety can be improved at low costs.

With reference to the first aspect, the braking system is in an active braking mode, the primary braking subsystem includes a first sensor, and the first sensor is configured to obtain braking force requirement information of a driver. The method may further include: determining braking force requirement information based on a running status and/or surrounding environment information of a vehicle. The controlling, by using the first control unit, an apparatus other than the faulty apparatus in the primary braking subsystem to adjust pressure of brake fluid in a brake wheel cylinder may include: when the working status indicates that the first sensor is faulty, controlling, based on the braking force requirement information by using the first control unit, an apparatus other than the first sensor in the primary braking subsystem to adjust the pressure.

When the braking system is in the active braking mode, the driver may not need to operate the braking system, and the braking force requirement information may come from motion status information and/or the surrounding environment information of the vehicle. Therefore, in the active braking mode, a fault of the first sensor does not affect adjustment performed by the primary braking subsystem on the pressure of the brake fluid in the brake wheel cylinder.

In this embodiment of this application, when the braking system is in the active braking mode, the first control unit works normally, and the first sensor in the primary braking subsystem is faulty, the pressure of the brake fluid in the brake wheel cylinder is adjusted by using the primary braking subsystem, so that an apparatus in the primary braking subsystem can be fully utilized to implement a basic brake function and a dynamics function, and redundancy performance of the braking system can be improved at low costs.

With reference to the first aspect, in some implementations of the first aspect, the primary braking subsystem includes a primary pressure increasing module, a fluid inlet valve, and a fluid outlet valve. The primary pressure increasing module is configured to adjust pressure of brake fluid in a first section of pipe, the first section of pipe is a brake pipe between the primary pressure increasing module and the fluid inlet valve, and when the fluid inlet valve is in an on state, the first section of pipe communicates with the brake wheel cylinder. The auxiliary braking subsystem includes an auxiliary pressure increasing module, and the auxiliary pressure increasing module is configured to adjust the pressure of the brake fluid in the first section of pipe. The controlling, by using the first control unit, an apparatus other than the faulty apparatus in the primary braking subsystem to adjust pressure of brake fluid in a brake wheel cylinder may include: when the working status indicates that the primary pressure increasing module is faulty, adjusting the pressure of the brake fluid in the first section of pipe by using the auxiliary pressure increasing module, and controlling, by using the first control unit, the fluid inlet valve and/or the fluid outlet valve to adjust the pressure of the brake fluid in the brake wheel cylinder.

In this embodiment of this application, when the primary pressure increasing module in the primary braking subsystem is faulty, the pressure of the brake fluid in the first section of pipe that communicates with a pressure inlet port of the fluid inlet valve is adjusted by using the auxiliary pressure increasing module in the auxiliary braking subsystem, and then the pressure of the brake fluid in the brake wheel cylinder is adjusted by using the fluid inlet valve and/or the fluid outlet valve. In this way, a single brake wheel cylinder can be controlled, and smooth running of a dynamics function can be ensured, to ensure braking safety.

With reference to the first aspect, in some implementations of the first aspect, the primary pressure increasing module includes a primary pressure supply apparatus, a first control valve, and a third sensor. The first control valve is configured to connect the primary pressure supply apparatus to the first section of pipe, the primary pressure increasing module adjusts the pressure of the brake fluid in the first section of pipe by using the primary pressure supply apparatus, and the third sensor is configured to sense a running status of the primary pressure supply apparatus. That the working status indicates that the primary pressure increasing module is faulty may include: the working status indicates that at least one of the primary pressure supply apparatus, the first control valve, and the third sensor is faulty.

For example, the first control valve may include one or more control valves. In other words, one or more control valves may be disposed between the primary pressure supply apparatus and the first section of pipe. That the primary pressure supply apparatus adjusts the pressure of the brake fluid in the first section of pipe when the first control valve is turned on may mean: when the one or more control valves between the primary pressure supply apparatus and the first section of pipe each are in an on state, the primary pressure supply apparatus may adjust the pressure of the brake fluid in the first section of pipe. That the first control valve is faulty may mean: at least one of the one or more control valves is faulty.

With reference to the first aspect, in some implementations of the first aspect, the primary braking subsystem includes a primary pressure increasing module, a fluid inlet valve, and a fluid outlet valve. The primary pressure increasing module is configured to adjust pressure of brake fluid in a first section of pipe, the first section of pipe is a brake pipe between the primary pressure increasing module and the fluid inlet valve, and when the fluid inlet valve is in an on state, the first section of pipe communicates with the brake wheel cylinder. The controlling, by using the first control unit, an apparatus other than the faulty apparatus in the primary braking subsystem to adjust pressure of brake fluid in a brake wheel cylinder may include: when the working status indicates that the fluid inlet valve is faulty and the fluid inlet valve is in the on state, and/or the fluid outlet valve is faulty and the fluid outlet valve is in an off state, controlling, by using the first control unit, the primary pressure increasing module to adjust the pressure.

For example, fluid inlet valves and/or fluid outlet valves disposed in the braking system may correspond to brake wheel cylinders respectively.

For example, when a fluid inlet valve is in an on state, a brake wheel cylinder communicates with the first section of pipe. For a fluid inlet valve that is faulty and is in an on state, a corresponding brake wheel cylinder communicates with the first section of pipe, and the primary pressure supply apparatus may adjust pressure of brake fluid in the brake wheel cylinder by adjusting the pressure of the brake fluid in the first section of pipe. For a normal fluid inlet valve, pressure of brake fluid in a brake wheel cylinder corresponding to the fluid inlet valve may be adjusted by using the primary pressure supply apparatus in combination with the fluid inlet valve and/or a fluid outlet valve.

For example, when a fluid outlet valve is faulty and is in an off state, brake fluid in a brake wheel cylinder is blocked by the fluid outlet valve and cannot flow to a reservoir apparatus. A fluid inlet valve is controlled to be in an on state, so that the primary pressure supply apparatus can adjust pressure of the brake fluid in the brake wheel cylinder corresponding to the faulty fluid outlet valve by adjusting the pressure of the brake fluid in the first section of pipe.

In this embodiment of this application, when the fluid inlet valve or the fluid outlet valve or both in the primary braking subsystem are faulty, the pressure of the brake fluid in the brake wheel cylinder is adjusted by using the primary pressure increasing module in the primary braking subsystem, to ensure implementation of a brake function.

For example, when braking forces on different groups of wheels of the vehicle are separately adjusted by controlling pressure of brake fluid in a plurality of independent brake pipes, the first section of pipe may include corresponding branches.

In an embodiment, the first section of pipe may include a first branch that is of the first section of pipe and that communicates with brake wheel cylinders (17 and 18) of a first group of wheels (121), and a second branch that is of the first section of pipe and that communicates with brake wheel cylinders (19 and 20) of a second group of wheels (122). For example, the first branch may include a brake loop supply pipe 171 and the like, and the second branch may include a brake loop supply pipe 172 and the like. For example, when all the fluid inlet valves are faulty and are in an on state, and/or all the fluid outlet valves are faulty and are in an off state, the primary pressure supply apparatus adjusts pressure of brake fluid in the first branch and the second branch of the first section of pipe separately, so that degraded use of a dynamics function can be implemented.

With reference to the first aspect, in some implementations of the first aspect, the braking system is in an active braking mode, the primary braking subsystem includes a pedal feel simulation module, and the pedal feel simulation module is configured to provide a pedal feel for a driver. The method may further include: determining braking force requirement information based on a running status and/or surrounding environment information of a vehicle. The controlling, by using the first control unit, an apparatus other than the faulty apparatus in the primary braking subsystem to adjust pressure of brake fluid in a brake wheel cylinder may include: when the working status indicates that the pedal feel simulation module is faulty, controlling, based on the braking force requirement information by using the first control unit, an apparatus other than the pedal feel simulation module in the primary braking subsystem to adjust the pressure of the brake fluid in the brake wheel cylinder.

For example, because the driver may not need to operate the braking system when the vehicle is in the active braking mode, there may be no need for the vehicle to use the pedal feel simulation module to provide a pedal feel for the driver.

In this embodiment of this application, when the pedal feel simulation module in the primary braking subsystem is faulty, the pressure of the brake fluid in the brake wheel cylinder is adjusted by using a normal apparatus in the primary braking subsystem, so that the apparatus in the primary braking subsystem can be fully utilized to implement a basic brake function and a dynamics function, without affecting use of the braking system.

With reference to the first aspect, in some implementations of the first aspect, the auxiliary braking subsystem is controlled by a second control unit. The method may further include: when the first control unit is faulty, controlling, by using the second control unit, the auxiliary braking subsystem to adjust the pressure of the brake fluid in the brake wheel cylinder.

According to a second aspect, a control apparatus for a braking system is provided. The braking system includes a primary braking subsystem and an auxiliary braking subsystem, and the primary braking subsystem is controlled by a first control unit. The apparatus may include: an obtaining unit, configured to obtain a working status of the first control unit and the primary braking subsystem; and a processing unit, which may be configured to: when the working status indicates that the first control unit works normally and an apparatus in the primary braking subsystem is faulty, control, by using the first control unit, an apparatus other than the faulty apparatus in the primary braking subsystem to adjust pressure of brake fluid in a brake wheel cylinder.

With reference to the second aspect, in some implementations of the second aspect, the braking system is in a driver braking mode, the primary braking subsystem includes a first sensor, the auxiliary braking subsystem includes a second sensor, and the first sensor and the second sensor are configured to obtain braking force requirement information of a driver. The processing unit may be configured to: determine information about a braking force based on the braking force requirement information obtained by the second sensor; and when the working status indicates that the first sensor is faulty, control, based on the information about the braking force by using the first control unit, an apparatus other than the first sensor in the primary braking subsystem to adjust the pressure.

With reference to the second aspect, the braking system is in an active braking mode, the primary braking subsystem includes a first sensor, and the first sensor is configured to obtain braking force requirement information of a driver. The processing unit is further configured to: determine braking force requirement information based on a running status and/or surrounding environment information of a vehicle. The processing unit may be configured to: when the working status indicates that the first sensor is faulty, control, based on the braking force requirement information by using the first control unit, an apparatus other than the first sensor in the primary braking subsystem to adjust the pressure.

With reference to the second aspect, in some implementations of the second aspect, the primary braking subsystem includes a primary pressure increasing module, a fluid inlet valve, and a fluid outlet valve. The primary pressure increasing module is configured to adjust pressure of brake fluid in a first section of pipe, the first section of pipe is a brake pipe between the primary pressure increasing module and the fluid inlet valve, and when the fluid inlet valve is in an on state, the first section of pipe communicates with the brake wheel cylinder. The auxiliary braking subsystem includes an auxiliary pressure increasing module, and the auxiliary pressure increasing module is configured to adjust the pressure of the brake fluid in the first section of pipe. The processing unit may be configured to: when the working status indicates that the primary pressure increasing module is faulty, adjust the pressure of the brake fluid in the first section of pipe by using the auxiliary pressure increasing module, and control, by using the first control unit, the fluid inlet valve and/or the fluid outlet valve to adjust the pressure of the brake fluid in the brake wheel cylinder.

With reference to the second aspect, in some implementations of the second aspect, the primary pressure increasing module includes a primary pressure supply apparatus, a first control valve, and a third sensor. The first control valve is configured to connect the primary pressure supply apparatus to the first section of pipe, the primary pressure increasing module adjusts the pressure of the brake fluid in the first section of pipe by using the primary pressure supply apparatus, and the third sensor is configured to sense a running status of the primary pressure supply apparatus. That the working status indicates that the primary pressure increasing module is faulty may include: the working status indicates that at least one of the primary pressure supply apparatus, the first control valve, and the third sensor is faulty.

With reference to the second aspect, in some implementations of the second aspect, the primary braking subsystem includes a primary pressure increasing module, and a fluid inlet valve and/or a fluid outlet valve. The primary pressure increasing module is configured to adjust pressure of brake fluid in a first section of pipe, the first section of pipe is a brake pipe between the primary pressure increasing module and the fluid inlet valve, and when the fluid inlet valve is in an on state, the first section of pipe communicates with the brake wheel cylinder. The processing unit may be configured to: when the working status indicates that the fluid inlet valve is faulty and the fluid inlet valve is in the on state, and/or the fluid outlet valve is faulty and the fluid outlet valve is in an off state, control, by using the first control unit, the primary pressure increasing module to adjust the pressure.

With reference to the second aspect, in some implementations of the second aspect, the braking system is in an active braking mode, the primary braking subsystem includes a pedal feel simulation module, and the pedal feel simulation module is configured to provide a pedal feel for a driver. The processing unit may be further configured to: determine braking force requirement information based on a running status and/or surrounding environment information of a vehicle. The processing unit may be configured to: when the working status indicates that the pedal feel simulation module is faulty, control, based on the braking force requirement information by using the first control unit, an apparatus other than the pedal feel simulation module in the primary braking subsystem to adjust the pressure.

With reference to the second aspect, in some implementations of the second aspect, the auxiliary braking subsystem is controlled by a second control unit. The processing unit may be further configured to: when the first control unit is faulty, control, by using the second control unit, the auxiliary braking subsystem to adjust the pressure.

According to a third aspect, a control apparatus is provided. The control apparatus includes a memory and a processor. The memory is configured to store a computer program, and the processor is configured to execute the computer program in the memory, so that the control apparatus can implement the method according to the first aspect and any possible implementation of the first aspect.

According to a non-claimed fourth aspect, a control system is provided. The braking system includes a primary braking subsystem, an auxiliary braking subsystem, and the control apparatus according to the second aspect or the third aspect and any possible implementation of the second aspect or the third aspect.

According to a fifth aspect, a vehicle is provided. The intelligent driving device includes the control apparatus according to the second aspect or the third aspect and any possible implementation of the second aspect or the third aspect, or includes the control system according to the fourth aspect and any possible implementation of the fourth aspect.

The vehicle in this application is a vehicle in a broad sense, and may be a transportation tool (for example, a commercial vehicle, a passenger vehicle, a motorcycle, a flight vehicle, or a train), an industrial vehicle (for example, a pallet truck, a trailer, or a tractor), an engineering vehicle (for example, an excavator, a bulldozer, or a crane), an agricultural device (for example, a lawn mower or a harvester), a recreation device, a toy vehicle, and the like. A type of the vehicle is not specifically limited in embodiments of this application.

According to a non-claimed sixth aspect, a computer program product is provided. The computer program product includes computer program code. When the computer program code is run on a computer, the computer is enabled to perform the method according to any possible implementation of the first aspect.

According to a seventh aspect, a computer-readable storage medium is provided. The computer-readable medium stores a computer program. When the computer program is run on a computer, the computer is enabled to perform the method according to any possible implementation of the first aspect.

According to a non-claimed eighth aspect, a chip is provided. The chip includes a circuit, configured to perform the method according to any possible implementation of the first aspect.

### BRIEF DESCRIPTION OF DRAWINGS

FIG. 1 is a diagram of a primary braking subsystem according to an embodiment of this application;
FIG. 2 is a diagram of an auxiliary braking subsystem according to an embodiment of this application;
FIG. 3 is a diagram of a braking system according to an embodiment of this application;
FIG. 4 is a diagram of a pressure increasing path of brake fluid in a braking system according to an embodiment of this application;
FIG. 5 is a diagram of another pressure increasing path of brake fluid in a braking system according to an embodiment of this application;
FIG. 6 is a diagram of another pressure increasing path of brake fluid in a braking system according to an embodiment of this application;
FIG. 7 is a diagram of another pressure increasing path of brake fluid in a braking system according to an embodiment of this application;
FIG. 8 is a schematic flowchart of a control method for a braking system according to an embodiment of this application;
FIG. 9 is a schematic flowchart of another control method for a braking system according to an embodiment of this application;
FIG. 10 is a diagram of a system architecture of a braking system according to an embodiment of this application;
FIG. 11 is a diagram of a control unit for an auxiliary braking subsystem according to an embodiment of this application;
FIG. 12 is a diagram of a structure of a control unit for a primary braking subsystem according to an embodiment of this application;
FIG. 13 is a diagram of a structure of a control apparatus for a braking system according to a non-claimed embodiment of this application; and
FIG. 14 is a block diagram of another control apparatus according to an embodiment of this application.

### DESCRIPTION OF EMBODIMENTS

The following describes technical solutions in embodiments of this application with reference to accompanying drawings.

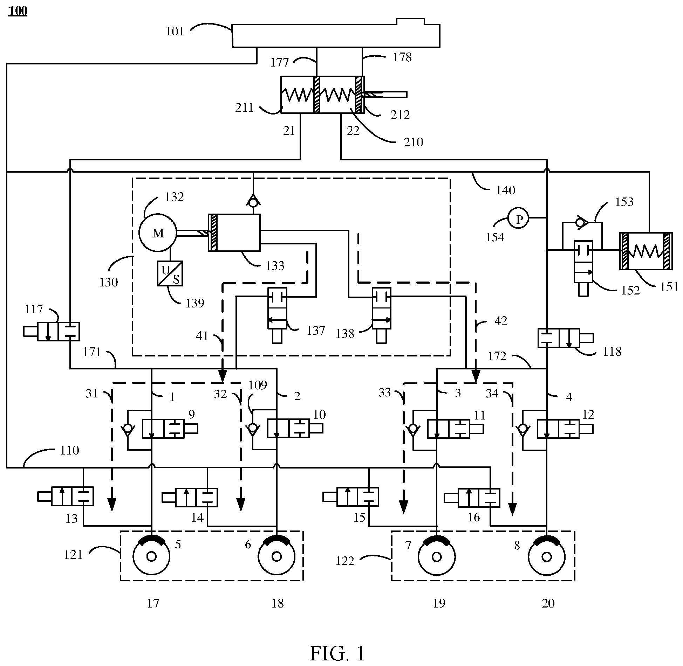

FIG. 1 is a diagram of a primary braking subsystem according to an embodiment of this application. The primary braking subsystem 100 shown in FIG. 1 includes a primary pressure increasing module 130. The primary pressure increasing module 130 may be configured to adjust pressure of brake fluid in brake wheel cylinders (17, 18, 19, and 20). A vehicle provided with a braking system may include a first group of wheels 121 and a second group of wheels 122, and braking forces may be provided for the wheels by using the brake wheel cylinders (17, 18, 19, and 20).

For example, the brake wheel cylinder 17 and the brake wheel cylinder 18 may provide braking forces for the wheels in the first group of wheels 121 respectively, and correspondingly the brake wheel cylinder 19 and the brake wheel cylinder 20 may provide braking forces for the wheels in the second group of wheels 122 respectively.

In an embodiment, the first group of wheels 121 may include a left front wheel and a right front wheel of the vehicle, and the second group of wheels 122 may include a right rear wheel and a left rear wheel of the vehicle. That is, the braking system may be in an H-shaped arrangement.

In another embodiment, the first group of wheels 121 may include a right front wheel and a left rear wheel, and the second group of wheels 122 may include a left front wheel and a right rear wheel. That is, the braking system may be in an X-shaped arrangement.

The primary pressure increasing module 130 may adjust the braking forces applied to the first group of wheels 121 by adjusting pressure of brake fluid in a first fluid inlet pipe 41. The primary pressure increasing module 130 may adjust the braking forces applied to the second group of wheels 122 by adjusting pressure of brake fluid in a second fluid inlet pipe 42.

The first fluid inlet pipe 41 may include a first fluid inlet branch 31 and a second fluid inlet branch 32, to control the braking forces applied to the two wheels in the first group of wheels 121 respectively. The second fluid inlet pipe 42 may include a third fluid inlet branch 33 and a fourth fluid inlet branch 34, to control the braking forces applied to the two wheels in the second group of wheels 122 respectively. For example, as shown in FIG. 1, a pressure outlet port of the first fluid inlet branch 31 may communicate with a pressure inlet port 5 of the brake wheel cylinder 17; and pressure outlet ports of the second fluid inlet branch 32, the third fluid inlet branch 33, and the fourth fluid inlet branch 34 may communicate with a pressure inlet port 6 of the brake wheel cylinder 18, a pressure inlet port 7 of the brake wheel cylinder 19, and a pressure inlet port 8 of the brake wheel cylinder 20 respectively.

For the braking system, in some cases, different braking forces need to be applied to different wheels.

For example, fluid inlet valves (9, 10, 11, and 12) may be disposed on fluid inlet pipes of the brake wheel cylinders (17, 18, 19, and 20), to independently adjust pressure of brake fluid in each brake wheel cylinder. When pressure of brake fluid in a brake wheel cylinder needs to be increased to apply a braking force to a corresponding wheel, a fluid inlet valve corresponding to the brake wheel cylinder may be controlled to be in an on state. When the pressure of the brake fluid in the brake wheel cylinder does not need to be increased, the fluid inlet valve may be controlled to be in an off state.

For example, as shown in FIG. 1, for the brake wheel cylinder 17, the fluid inlet valve 9 may be disposed on the first fluid inlet branch 31, a pressure inlet port of the fluid inlet valve 9 may communicate with a pressure outlet port of a brake pipe 1, and a pressure outlet port of the fluid inlet valve 9 may communicate with the pressure inlet port 5 of the brake wheel cylinder 17. When the fluid inlet valve 9 is in an on state, brake fluid in the first fluid inlet branch 31 may flow to the brake wheel cylinder 17, and the pressure of the brake fluid in the brake wheel cylinder 17 may be increased by increasing pressure of brake fluid in the brake pipe 1. When the fluid inlet valve 9 is in an off state, the brake fluid in the brake pipe 1 is blocked by the fluid inlet valve 9, and cannot flow to the brake wheel cylinder 17. For another example, as shown in FIG. 1, the fluid inlet valve 10, the fluid inlet valve 11, and the fluid inlet valve 12 may be disposed on the second fluid inlet branch 32, the third fluid inlet branch 33, and the fourth fluid inlet branch 34 respectively; and pressure outlet ports of the fluid inlet valve 10, the fluid inlet valve 11, and the fluid inlet valve 12 may communicate with the pressure inlet port 6 of the brake wheel cylinder 18, the pressure inlet port 7 of the brake wheel cylinder 19, and the pressure inlet port 8 of the brake wheel cylinder 20 respectively. For another example, one-way valves 109 connected in parallel with the fluid inlet valves (9, 10, 11, and 12) may be further disposed, to prevent brake fluid from flowing back. In this way, the pressure of the brake fluid in the brake wheel cylinders (17, 18, 19, and 20) can be separately adjusted.

For the braking system, in some cases, a braking force applied to a wheel needs to be decreased.

For example, fluid outlet valves (13, 14, 15, and 16) may be disposed on fluid outlet pipes of the brake wheel cylinders (17, 18, 19, and 20), to independently adjust pressure of brake fluid in each brake wheel cylinder. When pressure of brake fluid in a brake wheel cylinder needs to be decreased to decrease a braking force applied to a wheel, a fluid outlet valve corresponding to the brake wheel cylinder may be controlled to be in an on state. When the pressure of the brake fluid in the brake wheel cylinder does not need to be decreased, the fluid outlet valve may be controlled to be in an off state.

For example, as shown in FIG. 1, for the brake wheel cylinder 17, the brake wheel cylinder 17 may communicate with a fluid outlet pipe 110, and the fluid outlet valve 13 may be disposed on a brake pipe between the brake wheel cylinder 17 and the fluid outlet pipe 110. When the fluid outlet valve 13 is in an on state, brake fluid in the brake pipe may flow from the brake wheel cylinder 17 to the fluid outlet pipe 110 through the fluid outlet valve 13, and then flow to a reservoir apparatus 101, to decrease the pressure of the brake fluid in the brake wheel cylinder 17. When the fluid outlet valve 13 is in an off state, the brake fluid is blocked by the fluid outlet valve 13, and cannot flow from the brake wheel cylinder 17 to the fluid outlet pipe 110. For another example, as shown in FIG. 1, the fluid outlet valve 14, the fluid outlet valve 15, and the fluid outlet valve 16 may be disposed on brake pipes between the fluid outlet pipe 110 and the brake wheel cylinder 18, the brake wheel cylinder 19, and the brake wheel cylinder 20 respectively. In this way, the pressure of the brake fluid in the brake wheel cylinders (17, 18, 19, and 20) can be separately adjusted.

For example, in a process of decreasing braking forces applied to the wheels, the brake fluid in the brake wheel cylinders (17, 18, 19, and 20) may flow back to the reservoir apparatus 101 through the fluid outlet pipe 110. Therefore, the fluid outlet pipe 110 may also be referred to as an "oil return pipe".

It should be understood that the "fluid outlet pipe", "oil return pipe", and "fluid inlet pipe" mentioned above are distinguished only based on functions of the brake pipes in the braking system, and may correspond to different brake pipes, or may correspond to a same brake pipe. For example, as shown in FIG. 1, brake fluid flowing out of the brake wheel cylinder 18 may flow to the fluid outlet valve 14 through a part of pipe on the second fluid inlet branch 32, and then flow to the fluid outlet pipe 110. This part of pipe may be used as an oil inlet pipe, and may also be used as a fluid outlet pipe.

It should be understood that the "pressure outlet port" may be a port through which brake fluid flows out, and the "pressure inlet port" may be understood as a port through which brake fluid flows in. In other words, the "pressure outlet port" and the "pressure inlet port" may be understood as a role definition of a port in terms of function. The "pressure outlet port" and the "pressure inlet port" may be used to define roles of a physical port in different working modes. For example, in a pressure decreasing process of the brake wheel cylinder 18, when the fluid outlet valve 14 is in an on state, the pressure inlet port 6 may be used as a pressure outlet port of the brake wheel cylinder 18. Alternatively, the "pressure outlet port" and the "pressure inlet port" may correspond to two different physical ports.

The solution for the fluid outlet valve and the solution for the fluid inlet valve may be separately configured in a braking system for use, or may be used in one braking system in cooperation with each other. With reference to FIG. 1, the following describes a manner of connection between a fluid outlet valve and a fluid inlet valve by using the fluid outlet valve 14 and the fluid inlet valve 10 corresponding to the brake wheel cylinder 18 as an example.

The fluid inlet valve 10 is disposed on the second fluid inlet branch 32, a pressure inlet port of the fluid inlet valve 10 communicates with a brake pipe 2, and the pressure outlet port of the fluid inlet valve 10 communicates with the pressure inlet port 6 of the brake wheel cylinder 18. In addition, a pressure inlet port of the fluid outlet valve 14 communicates with the pressure inlet port 6 of the brake wheel cylinder 18, and a pressure outlet port of the fluid outlet valve 14 communicates with the fluid outlet pipe 110.

For example, a manner of connection between the fluid outlet valve 13 and the fluid inlet valve 9 corresponding to the brake wheel cylinder 17, a manner of connection between the fluid outlet valve 15 and the fluid inlet valve 11 corresponding to the brake wheel cylinder 19, and/or a manner of connection between the fluid outlet valve 16 and the fluid inlet valve 12 corresponding to the brake wheel cylinder 20 may be the same as a manner of connection between the fluid outlet valve 14 and the fluid inlet valve 10.

It should be understood that the fluid inlet valve and the fluid outlet valve may alternatively cooperate with each other in another manner. For example, the brake wheel cylinder 18 may have two independent physical ports. In this case, the brake wheel cylinder 18 may communicate with a brake loop supply pipe 171 and the fluid outlet pipe 110 through two parallel and independent brake pipes respectively, and the fluid inlet valve 10 and the fluid outlet valve 14 are disposed on the two independent brake pipes respectively.

In addition, the "fluid inlet valve" and "fluid outlet valve" mentioned above, and an "isolation valve" mentioned below are distinguished based on functions of the control valves in the braking system. A control valve configured to control fluid inlet pipes to be connected to or disconnected from each other may be referred to as a "fluid inlet valve", a "pressure increasing valve", or an "oil inlet valve". A control valve configured to control fluid outlet pipes to be connected to or disconnected from each other may be referred to as a "fluid outlet valve", a "pressure decreasing valve", or an "oil outlet valve". A control valve configured to isolate two-stage braking subsystems may be referred to as an "isolation valve". The foregoing control valve may be a commonly used valve in an existing braking system, for example, a solenoid valve and the like.

For example, in a braking system including the primary braking subsystem 100, a brake master cylinder 210 may be disposed. A pressure outlet port of the brake master cylinder 210 may communicate with a fluid inlet pipe, to adjust the pressure of the brake fluid in the brake wheel cylinders (17, 18, 19, and 20) by adjusting pressure of brake fluid in the fluid inlet pipe.

For example, the brake master cylinder 210 may be a single-chamber brake master cylinder, or may be a double-chamber brake master cylinder. A form of the brake master cylinder is not limited in embodiments of this application.

Optionally, when the brake master cylinder 210 is a tandem brake master cylinder, the brake master cylinder 210 may include a first chamber 211 and a second chamber 212. A first piston in the first chamber 211 and a second piston in the second chamber 212 may be connected by using a spring. When the first piston is displaced relative to a cylinder body, the spring may push the second piston to be displaced relative to the cylinder body.

In an embodiment, brake fluid flowing out of the second chamber 212 of the brake master cylinder 210 may flow to a brake wheel cylinder of the second group of wheels 122 through a pressure outlet port 22. Brake fluid in the first chamber 211 of the brake master cylinder 210 may flow to a brake wheel cylinder of the first group of wheels 121 through a pressure outlet port 21.

In another embodiment, the pressure outlet port 21 of the first chamber 211 may communicate with a brake wheel cylinder of the second group of wheels 122 through a fluid inlet pipe, and the pressure outlet port 22 of the second chamber 212 may communicate with a brake wheel cylinder of the first group of wheels 121 through a fluid inlet pipe.

For example, the brake master cylinder 210 may be connected to the reservoir apparatus 101 through a pressure compensation pipe, and the brake master cylinder 210 may obtain brake fluid from the reservoir apparatus 101 through the pressure compensation pipe. For example, when the brake master cylinder 210 is a tandem brake master cylinder, as shown in FIG. 1, the first chamber 211 and the second chamber 212 of the brake master cylinder 210 may communicate with the reservoir apparatus 101 through pressure compensation pipes (177 and 178) respectively. For another example, a control valve may be disposed on the pressure compensation pipe. When the control valve is turned off, brake fluid is blocked by the control valve, and cannot flow between the reservoir apparatus 101 and the brake master cylinder 210. When the control valve is turned on, the reservoir apparatus 101 communicates with the brake master cylinder 210. For another example, a one-way valve connected in parallel with the control valve may be further disposed, to prevent brake fluid from flowing back.

For example, a brake pedal may be disposed on a vehicle provided with the primary braking subsystem 100. The brake master cylinder 210 may be connected to the brake pedal by using a connection mechanism such as a piston rod, so that motion of the brake pedal can be coupled to motion of a piston in the brake master cylinder 210. Correspondingly, a brake pedal stroke sensor may be disposed in the braking system, to obtain a stroke of the brake pedal.

For example, one or more pressure sensors may be disposed on a brake pipe in the braking system, to detect pressure of brake fluid in the pipe. For example, a pressure sensor 154 may detect pressure of brake fluid in a brake pipe that communicates with a pressure outlet port of the brake master cylinder 210. For another example, a pressure sensor may be disposed on the first fluid inlet pipe 41 and/or the second fluid inlet pipe 42.

The primary pressure increasing module 130 may include a pressure supply apparatus. For ease of distinguishing, the pressure supply apparatus in the primary pressure increasing module 130 may also be referred to as a primary pressure supply apparatus.

For example, the primary pressure supply apparatus may include a hydraulic cylinder 133 and an apparatus configured to drive the hydraulic cylinder 133, for example, a motor 132. For example, the motor 132 may be configured to drive a piston in the hydraulic cylinder 133 to perform linear reciprocating motion to feed brake fluid in the hydraulic cylinder 133 into the first fluid inlet pipe 41 and/or the second fluid inlet pipe 42.

For example, the hydraulic cylinder 133 may be a dual apply plunger (dual apply plunger, DAP) cylinder, or may be a hydraulic cylinder in another form, for example, a single apply plunger cylinder.

For example, the primary pressure increasing module 130 may include one or more control valves. When the control valves are in an on state, brake fluid flowing out of the primary pressure supply apparatus may flow, through the control valves, to a brake pipe that communicates with a pressure inlet port of a fluid inlet valve, for example, brake loop supply pipes (171 and 172), the brake pipe 1, and the like.

In an embodiment, the primary pressure increasing module 130 may include a control valve 137 and a control valve 138. When the control valve 137 is turned on, the brake fluid in the first fluid inlet pipe 41 may flow from the hydraulic cylinder 133 to a brake wheel cylinder of the first group of wheels 121 through the first fluid inlet pipe 41. When the control valve 138 is turned on, the brake fluid in the second fluid inlet pipe 42 may flow from the hydraulic cylinder 133 to a brake wheel cylinder of the second group of wheels 122 through the second fluid inlet pipe 42. When the control valve 137 is turned off, the brake fluid flowing out of the hydraulic cylinder 133 is blocked by the control valve 137, and cannot flow to the brake loop supply pipe 171. When the control valve 138 is turned off, the hydraulic cylinder 133 does not communicate with the brake loop supply pipe 172.

For example, the primary pressure increasing module 130 may further include a sensor, to monitor a working status of the primary pressure supply apparatus. For example, the primary pressure increasing module 130 may further include a motor position sensor 139, to monitor a working status of the motor 132. For another example, a pressure sensor may be disposed on a brake pipe between the hydraulic cylinder 133 and the control valve 137 and/or the control valve 138, to monitor a status of adjustment performed by the hydraulic cylinder 133 on pressure of brake fluid in the brake pipe.

It should be understood that the first fluid inlet pipe 41 and the second fluid inlet pipe 42 may vary according to a form of the primary pressure supply apparatus. For example, when the hydraulic cylinder 133 is provided with two pressure outlet ports, the first fluid inlet pipe 41 and the second fluid inlet pipe 42 may communicate with the two pressure outlet ports respectively, as shown in FIG. 1. For another example, when the hydraulic cylinder 133 is provided with one pressure outlet port, the first fluid inlet pipe 41 and the second fluid inlet pipe 42 may share a part of brake pipe. For another example, a control valve, a pressure sensor, and the like may be disposed on the shared pipe of the first fluid inlet pipe 41 and the second fluid inlet pipe 42.

For example, a control valve, for example, a control valve 117 and a control valve 118, may be disposed on a brake pipe that communicates with a pressure outlet port of the brake master cylinder 210. The control valve 117 is used as an example. When the control valve 117 is turned on, the brake master cylinder 210 may communicate with the brake loop supply pipe 171. When the control valve 117 is turned off, brake fluid flowing out of the brake master cylinder 210 is blocked by the control valve 117, and cannot flow into the brake loop supply pipe 171. The control valve 117 and the control valve 118 may also be referred to as "isolation valves".

For example, information about braking forces to be applied to the wheels may be determined based on braking force requirement information.

In an embodiment, braking force requirement information of a driver may be determined based on an operation performed by the driver on the vehicle. For example, the braking force requirement information of the driver may be determined based on a stroke of the brake pedal. For another example, when the user presses the brake pedal, brake fluid in the brake master cylinder 210 flows to the brake pipe on which the pressure sensor 154 is located. In this case, the braking force requirement information of the driver may be determined based on brake fluid pressure collected by the pressure sensor 154. For another example, the information about the braking forces to be applied to the wheels may be determined based on the determined braking force requirement information of the driver.

In another embodiment, braking force requirement information may be determined based on a motion status and/or surrounding environment information of the vehicle. For example, the braking force requirement information may be determined based on a running status (for example, a wheel speed) and/or the surrounding environment information of the vehicle, to determine braking forces to be applied to the wheels, so as to implement one or more of the following dynamics functions: an autonomous antilock braking system (antilock braking system, ABS), an autonomous emergency braking (autonomous emergency braking, AEB) function, an adaptive cruise control (adaptive cruise control, ACC) function, an electronic stability control (electronic stability control system, ESC) system, an electronic stability control program (electronic stability program, ESP), a traction control system (traction control system, TCS), and the like.

Based on the foregoing information about the braking forces, the primary braking subsystem 100 may be controlled to provide the braking forces for the wheels.

For example, in a scenario in which the primary braking subsystem 100 works normally, when it is detected that the user presses the brake pedal, the isolation valve 117 and the isolation valve 118 may be controlled to be in an off state, and the braking force requirement information of the driver may be obtained based on the stroke of the brake pedal and/or the brake fluid pressure collected by the pressure sensor 154. The primary pressure increasing module 130 is controlled to act, to apply the corresponding braking forces to the wheels. In some possible implementations, a fluid inlet valve and/or a fluid outlet valve may be used, to control pressure of brake fluid in a single brake wheel cylinder.

Optionally, the primary braking subsystem 100 may further include a pedal feel simulation module configured to provide a pedal feel for the driver. For example, the pedal feel simulation module may include a pedal feel simulator 151, and may include one or more valves. For example, as shown in FIG. 1, a control valve 152 may be configured to connect the pedal feel simulator 151 to a brake pipe that communicates with the brake master cylinder 210. When the control valve 152 is turned on, brake fluid may flow to the pedal feel simulator 151 through the brake pipe. For another example, a one-way valve 153 connected in parallel with the control valve 152 may be disposed, to prevent the brake fluid from flowing back. The pedal feel simulator 151 may communicate with a fluid outlet pipe 140, and brake fluid flowing out of the pedal feel simulator 151 may flow to the reservoir apparatus 101 through the oil outlet pipe 140.

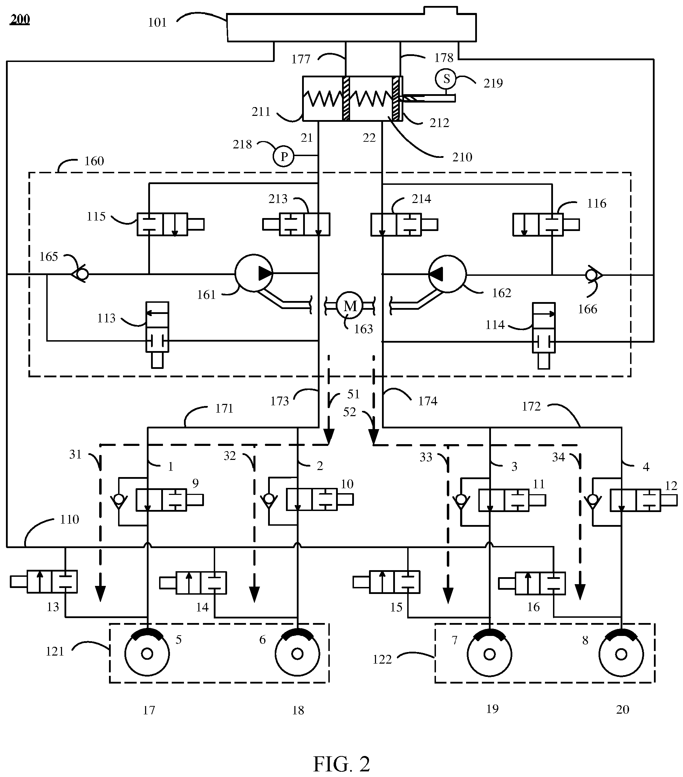

For example, FIG. 2 is a diagram of an auxiliary braking subsystem according to an embodiment of this application. The auxiliary braking subsystem 200 shown in FIG. 2 includes an auxiliary pressure increasing module 160. It should be understood that a component in FIG. 2 that has a same function as that in FIG. 1 is numbered the same as that in FIG. 1. For a specific function, refer to the foregoing descriptions.

The auxiliary pressure increasing module 160 may adjust braking forces applied to a first group of wheels 121 by adjusting pressure of brake fluid in a third fluid inlet pipe 51. The auxiliary pressure increasing module 160 may adjust braking forces applied to a second group of wheels 122 by adjusting pressure of brake fluid in a fourth fluid inlet pipe 52.

The auxiliary pressure increasing module 160 may include a pressure supply apparatus. For ease of distinguishing, the pressure supply apparatus in the auxiliary pressure increasing module 160 may also be referred to as an auxiliary pressure supply apparatus. The following describes the auxiliary pressure increasing module 160 by using an example in which a brake master cylinder 210 is a tandem brake master cylinder.

For example, the auxiliary pressure supply apparatus may include plunger pumps (161 and 162) and a drive apparatus for the plunger pumps, for example, a motor 163. For example, the motor 163 may drive, by using a transmission mechanism such as a belt, a gear, or a chain, the plunger pump 161 and the plunger pump 162 to act. Brake fluid whose pressure is increased by the plunger pump 161 and the plunger pump 162 may flow to corresponding brake wheel cylinders through the third fluid inlet pipe 51 and the fourth fluid inlet pipe 52 respectively. For another example, the plunger pump 161 and the plunger pump 162 may be driven by using two independent motors respectively.

For example, the auxiliary pressure increasing module 160 may further include one or more control valves. For example, the auxiliary pressure increasing module 160 may include a control valve 113, a control valve 114, a control valve 115, a control valve 116, a control valve 213, and a control valve 214.

For example, when the control valve 213 and the control valve 214 are turned off, brake fluid flowing out of the brake master cylinder 210 may be isolated from the brake fluid whose pressure is increased by the plunger pumps (161 and 162). When the control valve 213 and the control valve 214 are turned on, the brake fluid flowing out of the brake master cylinder 210 may flow to the corresponding brake wheel cylinders through the third fluid inlet pipe 51 and the fourth fluid inlet pipe 52 respectively. Therefore, the control valve 213 and the control valve 214 may also be referred to as "isolation valves".

For example, the control valve 113 may be configured to connect the third fluid inlet pipe 51 to a reservoir apparatus 101. Similarly, the control valve 114 may be disposed between the fourth fluid inlet pipe 52 and the reservoir apparatus 101. When the control valve 113 and the control valve 114 are turned on, the third fluid inlet pipe 51 and the fourth fluid inlet pipe 52 may communicate with the reservoir apparatus 101, and the brake fluid in the fluid inlet pipes may flow to the reservoir apparatus 101 through the control valve 113 and the control valve 114 respectively, so that the pressure of the brake fluid in the pipes is decreased. Therefore, the control valve 113 and the control valve 114 may also be referred to as "pressure decreasing valves" or "pressure release valves".

For example, the control valve 115 may be configured to connect the brake master cylinder 210 to the plunger pump 161. Similarly, the control valve 116 may be disposed between the brake master cylinder 210 and the plunger pump 162. The control valve 115 is used as an example. When the control valve 115 is turned off, the brake fluid flowing out of the brake master cylinder 210 is blocked by the control valve 115, and cannot flow to a pressure inlet port of the plunger pump 161. When the control valve 115 is turned on, the brake fluid flowing out of the brake master cylinder 210 may flow to the plunger pump 161 through the control valve 115, and brake fluid whose pressure is increased by the plunger pump 161 may flow to a brake wheel cylinder of the first group of wheels 121 through the third fluid inlet pipe 51.

For example, the plunger pump 161 and the plunger pump 162 may obtain brake fluid from the reservoir apparatus 101. A one-way valve may be disposed between the plunger pumps (161 and 162) and the reservoir apparatus, to prevent brake fluid from flowing back. For example, a one-way valve 165 may be configured to connect the reservoir apparatus 101 to the plunger pump 161. For another example, a one-way valve 166 may be disposed between the reservoir apparatus 101 and the plunger pump 162.

For example, a pressure sensor may be disposed on a brake pipe, to detect pressure of brake fluid in the pipe. For example, a pressure sensor 218 may be configured to detect pressure of brake fluid in a brake pipe that communicates with a pressure outlet port of the brake master cylinder 210. For another example, one or more sensors may be further disposed to measure the pressure of the brake fluid in the third brake pipe 51 and the fourth fluid inlet pipe 52.

For example, the auxiliary braking subsystem 200 may be controlled, based on information about a braking force, to provide the braking force for a wheel.

For example, when the auxiliary braking subsystem 200 works normally and it is detected that a user presses a brake pedal, the isolation valve 213 and the isolation valve 214 may be controlled to be in an off state, and the control valve 115 and the control valve 116 may be controlled to be in an on state. According to a braking force requirement of the driver, the motor 163 may be controlled to act and then drive the plunger pump 161 and the plunger pump 162, to apply corresponding braking forces to wheels.

The third brake pipe 51 may include a first fluid inlet branch 31 and a second fluid inlet branch 32, and the fourth brake pipe 52 may include a third fluid inlet branch 33 and a fourth fluid inlet branch 34. For a connection manner for the four fluid inlet branches and a configuration manner for a fluid inlet valve and a fluid outlet valve, refer to the descriptions of FIG. 1.

It should be understood that the foregoing descriptions of the auxiliary pressure increasing module 160 are merely examples, and a specific form of the auxiliary pressure increasing module is not limited in embodiments of this application. For example, when the brake master cylinder 210 is provided with only one pressure outlet port (for example, a pressure outlet port 21), the auxiliary pressure increasing module 160 may include only one plunger pump (for example, the plunger pump 161) and corresponding control valves (113, 115, and 213). Correspondingly, the third fluid inlet pipe 51 and the fourth fluid inlet pipe 52 may share a part of pipe, for example, a brake pipe 173.

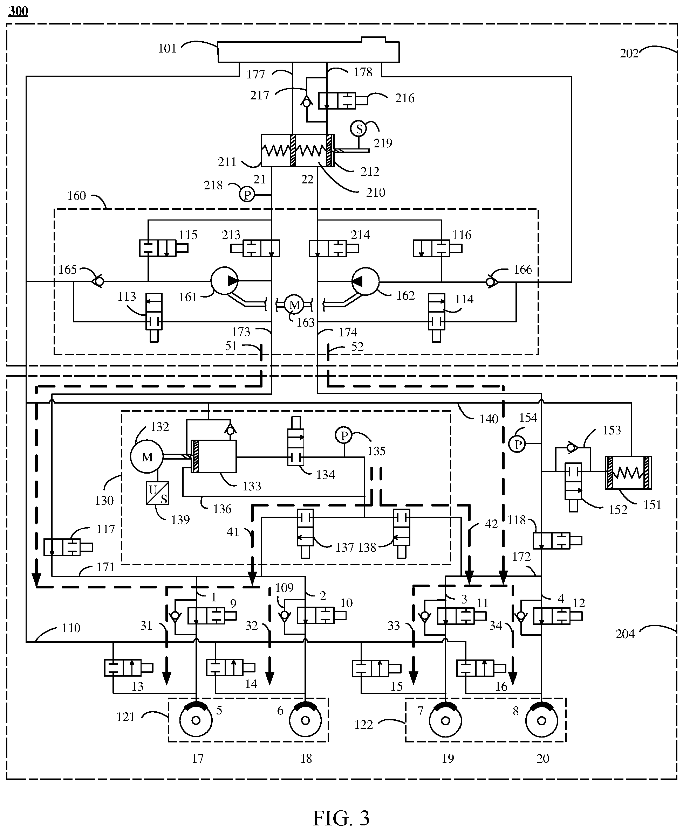

The following describes a braking system according to an embodiment of this application with reference to FIG. 3. FIG. 3 is a diagram of a braking system according to an embodiment of this application. The braking system 300 shown in FIG. 3 may include a primary braking subsystem and an auxiliary braking subsystem. The primary braking subsystem included in the braking system 300 may be understood as an extension or a variation of the primary braking subsystem 100 shown in FIG. 1, and the included auxiliary braking subsystem may be understood as an extension or a variation of the primary braking subsystem 200 shown in FIG. 2. It should be understood that a component in FIG. 3 that has a same function as that in FIG. 1 and/or FIG. 2 is numbered the same as that in FIG. 1 and/or FIG. 2. For a specific function of the component, refer to the foregoing descriptions.

For example, in the braking system 300 shown in FIG. 3, when a primary pressure increasing module 130 provides braking forces for wheels, an isolation valve 117 and an isolation valve 118 may be controlled to be in an off state. In this case, brake fluid flowing out of a hydraulic cylinder 133 may flow to brake wheel cylinders (17 and 18) of a first group of wheels 121 and brake wheel cylinders (19 and 20) of a second group of wheels 122 through a first fluid inlet pipe 41 and a second fluid inlet pipe 42 respectively. When an auxiliary pressure increasing module 160 provides braking forces for the wheels, the isolation valve 117 and the isolation valve 118 may be controlled to be in an on state. In this case, brake fluid whose pressure is increased by plunger pumps (161 and 162) may flow to the brake wheel cylinders (17 and 18) of the first group of wheels 121 and the brake wheel cylinders (19 and 20) of the second group of wheels 122 through a third fluid inlet pipe 51 and a fourth fluid inlet pipe 52 respectively.

In other words, the primary braking subsystem and the auxiliary braking subsystem may adjust pressure of brake fluid in the brake wheel cylinders by adjusting pressure of brake fluid in brake loop supply pipes (171 and 172).

For example, in the braking system 300, the first fluid inlet pipe 41 and the second fluid inlet pipe 42 may share a part of brake pipe. As shown in FIG. 3, a pressure sensor 135 may be disposed on the shared brake pipe, to monitor pressure of brake fluid whose pressure is increased by a primary pressure supply apparatus, and a control valve 134 may be further disposed on the shared brake pipe.

For example, in the braking system 300, a control valve 216 may be disposed on a pressure compensation pipe 178. A one-way valve 217 connected in parallel with the control valve 216 may be further disposed, to prevent brake fluid from flowing back.

Optionally, apparatuses in the braking system 300, for example, a pressure sensor 154, a brake pedal stroke sensor 219, a motor 132, the control valve 134, a control valve 137, and a control valve 138, may be controlled by one or more control apparatuses. For example, the apparatuses may be controlled by one or more control modules in one control apparatus. For another example, the apparatuses may be controlled by a plurality of control apparatuses, for example, controlled by a plurality of electronic control units (electronic control units, ECUs).

In an embodiment, an ECU1 and an ECU2 may separately control apparatuses in different areas in the braking system 300. For example, the ECU1 may control an apparatus in an area 202, and the ECU2 may control an apparatus in an area 204.

In another embodiment, the primary braking subsystem and the auxiliary braking subsystem may be in different areas. For example, as shown in FIG. 3, the area 204 may include an apparatus in the primary braking subsystem, and the area 2 may include an apparatus in the auxiliary braking subsystem.

For example, the ECU1 may obtain brake fluid pressure collected by the pressure sensors (154 and 134), the ECU1 may control the control valves (117, 118, 134, 137, and 138), fluid inlet valves (9, 10, 11, and 12), and the like, the ECU1 may be configured to control the motor 132 to act, and the ECU1 may obtain information collected by a motor position sensor 139. In this way, the ECU1 can control an apparatus in the primary braking subsystem.

For another example, the ECU2 may be configured to obtain brake fluid pressure collected by a pressure sensor 218, the ECU2 may obtain a pedal stroke sensed by the brake pedal stroke sensor 219, the ECU2 may control a control valve 213, a control valve 214, a control valve 113, a control valve 114, a control valve 115, a control valve 116, the control valve 216, and the like to act, and the ECU2 may control a motor 163 to act. In this way, the ECU2 can control an apparatus in the auxiliary braking subsystem 200.

For example, the plurality of electronic control units may exchange information with each other. For example, the ECU1 may determine information about a braking force to be applied to a wheel, and send the information about the braking force to the ECU2, so that the ECU2 can control, based on the information about the braking force, the auxiliary pressure increasing module 160 to act. For another example, the ECU2 may send, to the ECU1, information collected by the pressure sensor 218 and the brake pedal stroke sensor 219, so that the ECU1 can obtain braking force requirement information of a driver.

It should be understood that the area 202 and the area 204 shown in FIG. 3 are merely examples, and there may be another division manner. For example, a control valve 152 and a pedal feel simulator 151 may also be in the area 204. A division manner for areas is not limited in embodiments of this application.

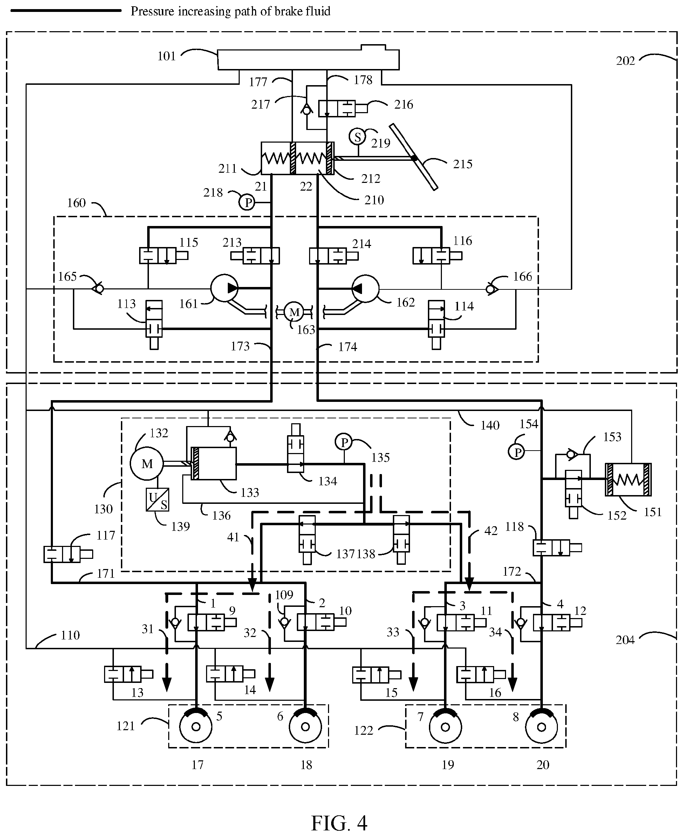

A manner of connection between elements in the braking system is described above with reference to FIG. 1 to FIG. 3. A plurality of working modes of the braking system are described below with reference to FIG. 4 to FIG. 8. It should be noted that priorities of the working modes of the braking system are not specifically limited in this application.

In the plurality of working modes, implementation of some functions in different modes may be the same. For example, manners of determining braking force requirement information may be the same in different modes. For another example, in different modes, pressure of brake fluid in a brake wheel cylinder may be adjusted by controlling a fluid inlet valve and/or a fluid outlet valve. Therefore, for brevity, functions implemented in the braking system are classified into the following scenarios for separate descriptions.

It is assumed that, in the braking system 300, the fluid inlet valves (9, 10, 11, and 12) are normally on valves, fluid outlet valves (13, 14, 15, and 16) are normally off valves, the isolation valves (213, 214, 117, and 118) are normally on valves, the control valves (113, 114, 115, 116, 152, 134, 137, and 138) are normally off valves, and the control valve 216 is a normally on valve.

Scenario 1: A working process and redundant solutions of the braking system 300 in a driver braking mode

In the driver braking mode, the isolation valve 117 and the isolation valve 118 are in an off state, the control valve 152 is in an on state, and other control valves in the braking system 300 may remain in the foregoing default state.

When a driver presses a brake pedal 215, brake fluid flowing out of a brake master cylinder 210 flows into a brake pipe 173 and a brake pipe 174. Because the isolation valves (117 and 118) are in the off state, the brake fluid is blocked by the isolation valves (117 and 118), making pressure of brake fluid in the brake pipe 173 and the brake pipe 174 increased. Because the control valve 152 is turned on, the brake fluid in the brake pipe 174 may flow to the pedal feel simulator 151 through the control valve 152.

For example, there are a plurality of manners of determining braking force requirement information of the driver. For example, a braking force requirement of the driver may be calculated based on at least one of the following: brake fluid pressure collected by the pressure sensor 154, brake fluid pressure collected by the pressure sensor 218, and a pedal stroke detected by the brake pedal stroke sensor 219. In terms of determining the braking force requirement information, data collected by the pedal stroke sensor 219, the pressure sensor 154, and the pressure sensor 218 may be used as redundant backups of each other. Therefore, the pedal stroke sensor 219, the pressure sensor 154, and the pressure sensor 218 may be referred to as "redundant sensors".

Correspondingly, the primary braking subsystem in the braking system 300 may provide a braking force for a wheel based on the braking force requirement information.

In an embodiment, in a pressure increasing process, the control valve 134, the control valve 137, and the control valve 138 are controlled to be in an on state. Based on the braking force requirement information, the motor 132 is controlled to drive the hydraulic cylinder 133 to compress brake fluid. Brake fluid flowing out of the hydraulic cylinder 133 may flow to the brake wheel cylinders of the first group of wheels 121 and the second group of wheels 122 through the first fluid inlet pipe 41 and the second fluid inlet pipe 42 respectively. For a pressure increasing path of brake fluid in the braking system 300, refer to FIG. 4.

In another embodiment, after the pressure increasing process is completed, a pressure maintaining process may be entered. The isolation valves (137 and 138) may be controlled to be in an off state, and states of other control valves in the braking system 300 remain unchanged. In addition, the motor 132 may be controlled to stop acting.

In another embodiment, when the driver releases the brake pedal 215, a pressure decreasing process may be entered. Brake fluid in the pedal feel simulator 151 may flow back to the brake master cylinder 210 through the control valve 152. The motor 132 is controlled to drive the hydraulic cylinder 133 to work in reverse, so that pressure of brake fluid in the brake wheel cylinders (17, 18, 19, and 20) can be greater than pressure of brake fluid in the hydraulic cylinder 133, and brake fluid may return to the hydraulic cylinder 133 from the brake wheel cylinders (17, 18, 19, and 20) through the fluid inlet valves (9, 10, 11, and 12).

Optionally, in the pressure decreasing process, the isolation valves (117 and 118) may alternatively be controlled to be in an on state, so that brake fluid flows from the brake wheel cylinders (17, 18, 19, and 20) to the brake master cylinder 210, and then flows from the brake master cylinder 210 to a reservoir apparatus 101.

Optionally, when quick pressure decreasing is needed, the fluid outlet valves (13, 14, 15, and 16) may be further turned on, so that brake fluid flows from the brake wheel cylinders (17, 18, 19, and 20) to a fluid outlet pipe 110, and then flows back to the reservoir apparatus 101.

It should be understood that the foregoing solution of determining the braking force requirement information does not directly affect implementation of dynamics functions such as an ABS, AEB, ACC, a TCS, and ESC. When a single brake wheel cylinder needs to be controlled to implement the foregoing dynamics function, a fluid inlet valve and/or a fluid outlet valve in the primary braking subsystem may be controlled, to implement pressure increasing, pressure maintaining, and pressure decreasing operations of the single brake wheel cylinder.

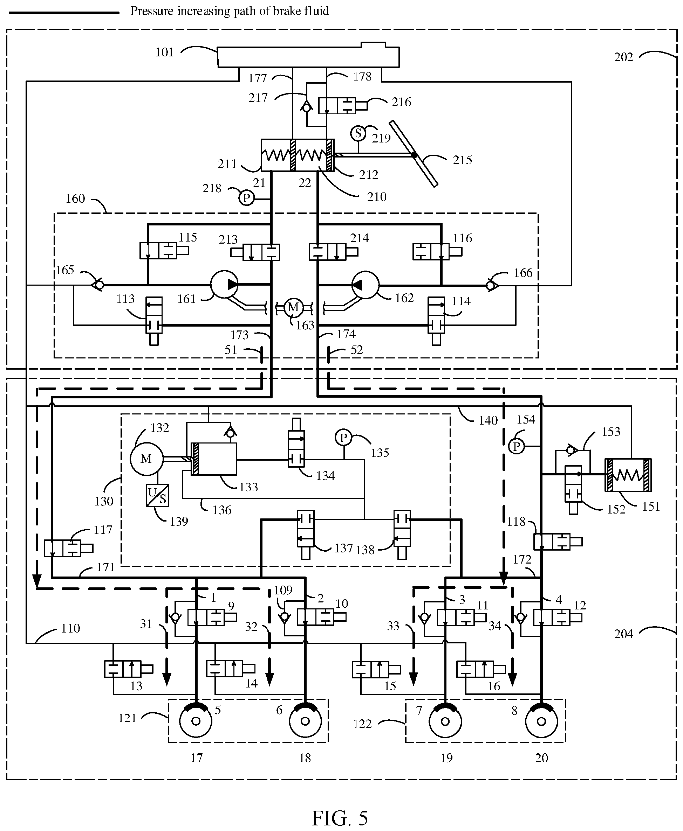

The following describes redundant solutions used when an apparatus in the primary braking subsystem is faulty in this scenario with reference to FIG. 5 to FIG. 7.

Redundant solution 1: When a first sensor in the primary braking subsystem is faulty, braking force requirement information may be obtained based on a second sensor in the auxiliary braking subsystem. Based on the braking force requirement information, an apparatus in a normal state in the primary braking subsystem is controlled to act.

The first sensor includes a sensor that is in the primary braking subsystem and that is configured to obtain braking force requirement information of a driver, for example, the pressure sensor 154. The second sensor includes a sensor that is in the auxiliary braking subsystem and that is configured to obtain braking force requirement information of a driver, for example, the pressure sensor 218 and the brake pedal stroke sensor 219.

For example, the ECU1 controls the area 202, the ECU2 controls the area 204, and the ECU1 and the ECU2 may exchange information with each other. When it is determined that the pressure sensor 154 is faulty, based on data collected by the pressure sensor 218 and/or the brake pedal stroke sensor 219, the ECU2 may determine braking force requirement information, control the solenoid valve 134, the solenoid valve 137, and the solenoid valve 138 to be turned on, and control the motor 132 to drive the hydraulic cylinder 133 to act, to adjust pressure of brake fluid in a brake wheel cylinder, so as to provide a braking force for a wheel. In this redundant solution, for a pressure increasing path of brake fluid in the braking system 300, reference may be made to FIG. 4.

In this redundant solution, when the first sensor in the primary braking subsystem is faulty, based on the braking force requirement information of the driver obtained by the second sensor in the auxiliary braking subsystem, the primary braking subsystem is controlled to act. A fluid inlet valve and/or a fluid outlet valve in the primary braking subsystem can be used, to ensure normal running of dynamics functions such as an ABS, a TCS, an ESP, and ESC, so that an apparatus in a normal state in the braking system can be fully utilized, and braking safety can be improved at low costs.

Redundant solution 2: When the primary pressure increasing module 130 in the primary braking subsystem is faulty, the auxiliary pressure increasing module 160 in the auxiliary braking subsystem may adjust pressure of brake fluid in a first section of pipe. Pressure of brake fluid in a brake wheel cylinder is adjusted by using a fluid inlet valve and/or a fluid outlet valve in the primary braking subsystem and the pressure of the brake fluid in the first section of pipe.

The first section of pipe may include a fluid inlet pipe between the fluid inlet valve and the primary pressure increasing module. When the fluid inlet valve is in an on state, the first section of pipe communicates with the brake wheel cylinder. For example, for the fluid inlet valve 9, the first section of pipe may include a brake pipe 1 and a brake loop supply pipe 171, and may include a brake pipe between a pressure outlet port of the isolation valve 137 and a pressure inlet port of the brake loop supply pipe 171. For another example, for the fluid inlet valve 12, the first section of pipe may include a brake pipe 4 and a brake loop supply pipe 172, and may include a brake pipe between a pressure outlet port of the isolation valve 138 and a pressure inlet port of the brake loop supply pipe 172.

The primary pressure increasing module 130 may include a primary pressure supply apparatus and a first control valve. The first control valve is configured to connect the primary pressure supply apparatus to the first section of pipe. When the first control valve is in an on state, the primary pressure supply apparatus is configured to adjust the pressure of the brake fluid in the first section of pipe. The primary pressure increasing module 130 may further include a third sensor, and the third sensor may be configured to sense a running status of the primary pressure supply apparatus. For example, in FIG. 3, for the fluid inlet valve 9, the first control valve may include the control valve 134 and the control valve 137. For another example, the third sensor may include the motor position sensor 139, and may include the pressure sensor 135. For another example, the primary pressure supply apparatus may include the motor 132 and the hydraulic cylinder 133.

That the primary pressure increasing module 130 is faulty may mean that at least one of the primary pressure supply apparatus, the first control valve, and the third sensor is in a faulty state.

For example, the ECU1 controls the area 202, and the ECU2 controls the area 204. When the primary pressure increasing module 130 is faulty, the ECU1 may receive information about a braking force from the ECU2, and control the isolation valve 213 and the isolation valve 214 to be in an off state, the control valve 115 and the control valve 116 to be in an on state, and the isolation valve 117 and the isolation valve 118 to be in an on state. Brake fluid flowing out of a plunger pump 161 and a plunger pump 162 may flow to the brake wheel cylinders (17, 18, 19, and 20) through the third fluid inlet pipe 51 and the fourth fluid inlet pipe 52 respectively and through the brake loop supply pipes (171 and 172) respectively, to adjust braking forces applied to the wheels. The ECU2 may control a fluid inlet valve and/or a fluid outlet valve to act, to control a single brake wheel cylinder. In this way, dynamics functions such as an ABS, AEB, ACC, a TCS, and ESC can be run smoothly, to ensure braking safety. In this redundant solution, for a pressure increasing path of brake fluid in the braking system 300, reference may be made to FIG. 5.

In this redundant solution, when the primary pressure increasing module 130 in the primary braking subsystem is faulty, the pressure of the brake fluid in the first section of pipe is adjusted by using the auxiliary pressure increasing module 160 in the auxiliary braking subsystem. Pressure of brake fluid in a brake wheel cylinder is adjusted by using a fluid inlet valve and/or a fluid outlet valve in the primary braking subsystem, so that an apparatus in a normal state in the braking system can be fully utilized, and braking safety can be improved at low costs.

Redundant solution 3: When a fluid inlet valve or a fluid outlet valve or both in the primary braking subsystem are faulty, the primary pressure increasing module 130 may adjust the pressure of the brake fluid in the first section of pipe.

For example, a faulty apparatus is the fluid inlet valve 9. It is assumed that the fluid inlet valve 9 is a normally on valve, and the fluid inlet valve 9 cannot be turned off normally due to a fault. Pressure of brake fluid in the brake loop supply pipe 171 and the brake loop supply pipe 172 may be adjusted by using the primary pressure increasing module 130 in combination with the control valve 137 and the control valve 138 respectively. When the fluid inlet valve 9 is in an on state, the pressure of the brake fluid in the brake wheel cylinder 17 may change with the pressure of the brake fluid in the brake loop supply pipe 171. In this redundant solution, for a pressure increasing path of brake fluid in the braking system 300, reference may be made to FIG. 4.

Control of a single brake wheel cylinder may not be implemented due to a fault of the fluid inlet valve and/or the fluid outlet valve. This may affect implementation of a dynamics function.

In an embodiment, when dynamics functions such as an ABS, a TCS, and ESC need to be implemented, the fluid inlet valves (9, 10, 11, and 12) may be controlled to be in an on state, so that the pressure of the brake fluid in the brake wheel cylinder 17 and the brake wheel cylinder 18 and the pressure of the brake fluid in the brake wheel cylinder 19 and the brake wheel cylinder 20 can change with adjustment of the pressure of the brake fluid in the brake loop supply pipe 171 and the brake loop supply pipe 172 respectively. In this way, braking forces applied to the first group of wheels 121 and the second group of wheels 122 can be adjusted by adjusting the pressure of the brake fluid in the brake loop supply pipe 171 and the brake loop supply pipe 172 respectively, to implement degraded use of the dynamics functions such as the ABS, the TCS, and the ESC.

In another embodiment, some brake wheel cylinders may be separately controlled by using the primary pressure increasing module 130 to adjust the pressure of the brake fluid in the brake loop supply pipe 171 and the brake loop supply pipe 172 and by using a fluid inlet valve and/or fluid outlet valve in a normal state.

For example, a faulty apparatus is the fluid outlet valve 13. It is assumed that the fluid outlet valve 13 is a normally off valve, and the fluid outlet valve 13 cannot be turned on normally due to a fault.

In an embodiment, the fluid inlet valves may be controlled to be in an on state, and the fluid outlet valves may be controlled to be in an off state, so that the pressure of the brake fluid in the brake wheel cylinder 17 and the brake wheel cylinder 18 and the pressure of the brake fluid in the brake wheel cylinder 19 and the brake wheel cylinder 20 can change with adjustment of the pressure of the brake fluid in the brake loop supply pipe 171 and the brake loop supply pipe 172 respectively.

In another embodiment, that the fluid outlet valve 13 is faulty is used as an example, and some brake wheel cylinders may be separately controlled by using another fluid inlet valve and/or fluid outlet valve in a normal state.

In this redundant solution, when the faulty apparatus includes a fluid inlet valve and the fluid inlet valve is in an on state, and/or the faulty apparatus includes a fluid outlet valve and the fluid outlet valve is in an off state, the primary pressure increasing module 130 is controlled to adjust the pressure of the brake fluid in the first section of pipe, so as to adjust pressure of brake fluid in a brake wheel cylinder. An apparatus in a normal state in the braking system can be fully utilized, to implement degraded use of a dynamics function, and improve braking safety at low costs.

Redundant solution 4: When a control unit for the primary braking subsystem is faulty, pressure of brake fluid in a brake wheel cylinder may be adjusted by using the auxiliary braking subsystem.

For example, when the control unit (for example, the ECU2) for the primary braking subsystem is faulty, a control unit (for example, the ECU1) for the auxiliary braking subsystem may control the isolation valve 213 and the isolation valve 214 to be in an off state, and the control valve 115 and the control valve 116 to be in an on state. The auxiliary pressure increasing module 160 in the auxiliary braking subsystem is controlled to act, so that the brake fluid flowing out of the plunger pump 161 and the plunger pump 162 can flow to the brake wheel cylinders of the first group of wheels 121 and the second group of wheels 122 through the third fluid inlet pipe 51 and the fourth fluid inlet pipe 52 respectively. Pressure of brake fluid in the third fluid inlet pipe 51 and the fourth fluid inlet pipe 52 may be adjusted by using the pressure decreasing valve 113 and the pressure decreasing valve 114 respectively. In this redundant solution, for a pressure increasing path of brake fluid in the braking system 300, reference may be made to FIG. 5.

In this redundant solution, pressure in the brake wheel cylinders of the first group of wheels 121 and the second group of wheels 122 is adjusted by using the third fluid inlet pipe 51 and the fourth fluid inlet pipe 52 respectively, to implement degraded use of dynamics functions such as an ABS, a TCS, and ESC.

Scenario 2: A working process and redundant braking solutions of the braking system 300 in an active braking mode

Similar to an active pressure increasing solution in the driver braking mode described in Scenario 1, the braking system may perform braking by using the primary braking subsystem. A difference from the driver braking mode described in Scenario 1 lies in that a driver may not need to operate the brake pedal 215 in the active braking mode.

For example, in the active braking mode, braking force requirement information is determined based on a motion status and/or surrounding environment information of a vehicle, to control the primary braking subsystem to adjust pressure of brake fluid in a brake wheel cylinder.

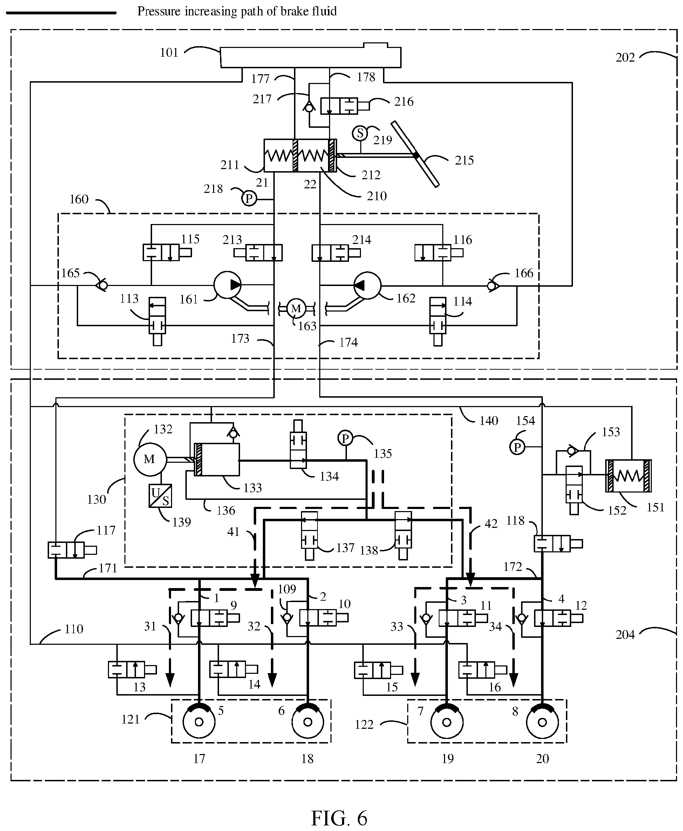

In an embodiment, in a pressure increasing process, the isolation valve 117 and the isolation valve 118 are controlled to be in an off state, the control valve 134, the control valve 137, and the control valve 138 are controlled to be in an on state, and other control valves remain in the foregoing default state. The motor 132 is controlled to drive the hydraulic cylinder 133 to compress brake fluid, and brake fluid flowing out of the hydraulic cylinder 133 may flow to the brake wheel cylinders (17, 18, 19, and 20) through the first fluid inlet pipe 41 and the second fluid inlet pipe 42. For a pressure increasing path of brake fluid in the braking system 300, refer to FIG. 6.

In an embodiment, in a pressure maintaining process, the control valve 137 and the control valve 138 may be controlled to be in an off state, and the motor 132 may be controlled to stop acting. Alternatively, the control valve 134 may be controlled to be in an off state.

In an embodiment, in a pressure decreasing process, the hydraulic cylinder 133 may work in reverse under driving of the motor 132, and brake fluid in the brake wheel cylinders (17, 18, 19, and 20) may return to the hydraulic cylinder 133 through the fluid inlet valves (9, 10, 11, and 12). In some possible implementations, the fluid outlet valves (13, 14, 15, and 16) may be further turned on, so that brake fluid in the brake wheel cylinders (17, 18, 19, and 20) flows to the reservoir apparatus 101 through the fluid outlet pipe 110.

For example, when a single brake wheel cylinder needs to be controlled to act, a fluid inlet valve and/or a fluid outlet valve of the brake wheel cylinder may be used, to implement pressure increasing, pressure maintaining, and pressure decreasing operations of the single brake wheel cylinder.

It should be understood that a redundant solution in the active braking mode is essentially the same as a redundant solution in the driver braking mode. Therefore, reference may be made to the redundant solution in the driver braking mode.

In the invention, because the user may not need to operate the brake pedal 215 in the active braking mode, the braking force requirement information is obtained based on the motion status and/or the surrounding environment information of the vehicle. When a first sensor in the primary braking subsystem is faulty, pressure of brake fluid in a brake wheel cylinder may be adjusted based on the obtained braking force requirement information by using the primary pressure increasing module 130, a fluid inlet valve, and/or a fluid outlet valve.

In another embodiment, when the primary pressure increasing module 130 in the primary braking subsystem is faulty, the isolation valve 213 and the isolation valve 214 may be controlled to be in an off state, and other control valves in the braking system are in the default state. Pressure of brake fluid in the brake wheel cylinders (17, 18, 19, and 20) is adjusted by using the auxiliary pressure increasing module 160 in the auxiliary braking subsystem to adjust pressure of brake fluid in the brake loop supply pipes (171 and 172) and by using a fluid inlet valve and/or a fluid outlet valve.

In another embodiment, when the fluid inlet valve 10 in the primary braking subsystem cannot be turned off due to a fault, pressure of brake fluid in the brake loop supply pipe 171 and the brake loop supply pipe 172 may be adjusted by using the primary pressure increasing module 130. A fluid inlet valve is controlled to be in an on state, to implement degraded use of dynamics functions such as an ABS, AEB, a TCS, and ESC.

In another embodiment, when the ECU2 is faulty, for example, when the ECU2 cannot control the primary braking subsystem due to a power failure or other reasons, the ECU1 may control the isolation valve 213 and the isolation valve 214 to be in an off state, and other control valves in the braking system are in the foregoing default state. Pressure of brake fluid in the brake wheel cylinders (17, 18, 19, and 20) is adjusted by using the auxiliary pressure increasing module 160 in the auxiliary braking subsystem. In this manner, degraded use of dynamics functions such as an ABS, AEB, and a TCS can also be implemented, and braking safety can be improved.

In another embodiment, when a pedal feel simulation module in the primary braking subsystem is faulty, because the isolation valve 117 and the isolation valve 118 are in an off state and the user does not need to operate the brake pedal in the active braking mode, a fault of the pedal feel simulation module does not directly affect action of the primary braking subsystem. Based on the braking force requirement information obtained from the motion status and/or the surrounding environment information of the vehicle, a braking force may be provided for a wheel by using the primary pressure increasing module 130, a fluid inlet valve, and/or a fluid outlet valve.

Scenario 3: A redundant backup solution for manual braking When the primary braking subsystem cannot work and the auxiliary braking subsystem is faulty, pressure of brake fluid in a brake wheel cylinder may be adjusted in a manual braking manner.

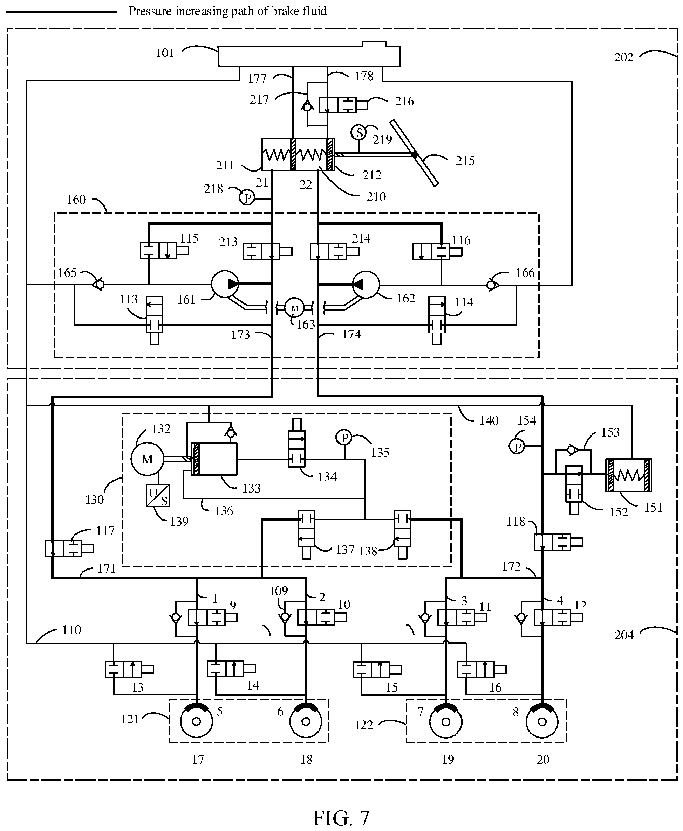

For example, control valves in the braking system each are in the default state, a driver presses the brake pedal 215, the brake master cylinder 210 feeds brake fluid into the brake pipe 173 and the brake pipe 174, and the brake fluid flows into the brake wheel cylinders (17, 18, 19, and 20) through the fluid inlet valves (9, 10, 11, and 12), to implement a brake function. For a pressure increasing path of brake fluid in the braking system, refer to FIG. 7.

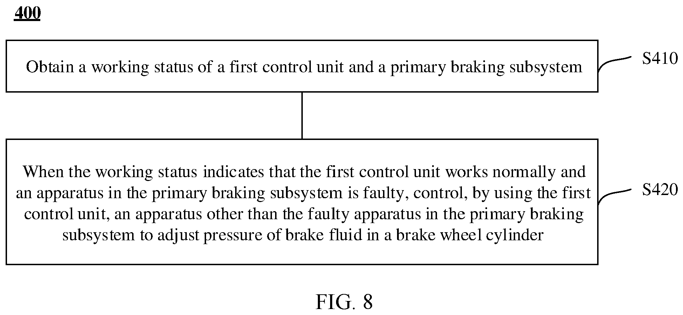

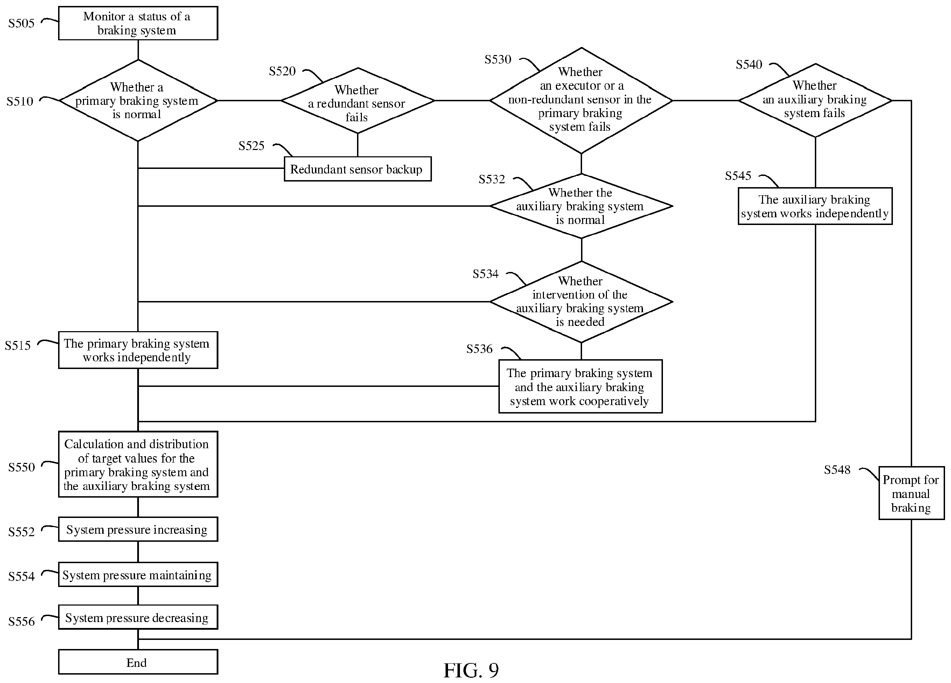

The braking system according to embodiments of this application is described above with reference to FIG. 1 to FIG. 7. A control method that is based on the foregoing braking system and that is provided in an embodiment of this application is described with reference to FIG. 8 and FIG. 9. The method shown in FIG. 8 may be performed by the braking system, may be performed by one or more controllers for the braking system, may be performed by an intelligent driving device provided with the braking system, or may be performed by a control apparatus in the intelligent driving device.

For example, FIG. 8 is a schematic flowchart of a control method for a braking system according to an embodiment of this application. The method 400 shown in FIG. 8 may be used in conjunction with the braking system described above. The braking system may include a primary braking subsystem and an auxiliary braking subsystem. The method 400 may include the following steps.

S410: Obtain a working status of a first control unit and the primary braking subsystem.

For example, the primary braking subsystem may be controlled by the first control unit. In an embodiment, the braking system may be controlled by a plurality of controllers, and a controller configured to control the primary braking subsystem may be used as the first control unit. In another embodiment, the braking subsystem is controlled by one controller, and a module that is in the controller and that is configured to control the primary braking subsystem may be determined as the first control unit.

For example, the working status may indicate that the first control unit works normally or is faulty, and may also indicate that the primary braking subsystem works normally or is faulty. When there is a faulty apparatus in the primary braking subsystem, it may be determined that the primary braking subsystem is faulty. For example, the first control unit may periodically feed back a working status of an apparatus in the primary braking subsystem. If the first control unit does not feed back a working status of the primary braking subsystem within preset time, it may be determined that the first control unit is faulty. For another example, the first control unit may send fault information, and a control apparatus such as a chip or a controller that performs the method may learn that there is a faulty apparatus in the first control unit and the primary braking subsystem. For another example, the first control unit may monitor a running status of the first control unit in real time.

For example, the auxiliary braking subsystem may be controlled by a second control unit.

S420: When the working status indicates that the first control unit works normally and an apparatus in the primary braking subsystem is faulty, control, by using the first control unit, an apparatus other than the faulty apparatus in the primary braking subsystem to adjust pressure of brake fluid in a brake wheel cylinder.

For example, adjusting the pressure of the brake fluid in the brake wheel cylinder by using the apparatus other than the faulty apparatus in the primary braking subsystem may be adjusting the pressure of the brake fluid in the brake wheel cylinder only by using an apparatus that works normally in the primary braking subsystem. The foregoing braking system 300 is used as an example. In Scenario 2, that is, in a scenario in which the braking system 300 is in the active braking mode, when the pedal feel simulation module or the pressure sensor 154 in the primary braking subsystem is faulty, the pressure of the brake fluid in the brake wheel cylinder may still be adjusted by using the primary braking subsystem. For another example, when the braking system 300 is in the driver braking mode, and a fluid inlet valve or a fluid outlet valve or both are faulty, according to Redundant solution 3 in Scenario 1, the pressure of the brake fluid in the brake wheel cylinder may be adjusted by using the primary braking subsystem. For another example, when the braking system 300 is in the active braking mode, and a fluid inlet valve is faulty and the fluid inlet valve is in an on state, according to the redundant solution in Scenario 2, a braking force may be applied to a wheel by using the primary braking subsystem.

For example, adjusting the pressure of the brake fluid in the brake wheel cylinder by using the apparatus other than the faulty apparatus in the primary braking subsystem may alternatively be adjusting the pressure of the brake fluid in the brake wheel cylinder by using an apparatus that works normally in the primary braking subsystem and an apparatus in the auxiliary braking subsystem. The foregoing braking system 300 is used as an example. In Scenario 1, that is, in a scenario in which the braking system 300 is in the driver braking mode, when the primary pressure increasing module 130 is faulty, according to Redundant solution 2 in Scenario 1, the pressure of the brake fluid in the brake wheel cylinder may be adjusted by using the auxiliary pressure increasing module 160 and normal apparatuses such as a fluid inlet valve, a fluid outlet valve, and a control valve in the primary braking subsystem. For another example, when the braking system 300 is in the driver braking mode, and the pressure sensor 154 is faulty, according to Redundant solution 1 in Scenario 1, braking force requirement information of a driver may be determined based on information collected by the brake pedal stroke sensor 219 and/or the pressure sensor 218, and the pressure of the brake fluid in the brake wheel cylinder is adjusted accordingly. For another example, when the braking system 300 is in the active braking mode, and the primary pressure increasing module is faulty, according to the redundant solution in Scenario 2, a braking force may be applied to a wheel by using the auxiliary pressure increasing module 160, a fluid inlet valve, a fluid outlet valve, and the like.

Optionally, the second control unit may be configured to: when the first control unit is faulty, control the auxiliary braking subsystem to adjust the pressure of the brake fluid in the brake wheel cylinder. The braking system 300 shown in FIG. 3 is used as an example. When the control unit for the primary braking subsystem is faulty, according to Redundant solution 4 in Scenario 1, the control unit for the auxiliary braking subsystem may control the auxiliary braking subsystem to adjust pressure of brake fluid in the brake wheel cylinders (17, 18, 19, and 20).

In this embodiment of this application, when the first control unit is normal and an apparatus in the primary braking subsystem is faulty, the pressure of the brake fluid in the brake wheel cylinder is adjusted by using an apparatus other than the faulty apparatus in the primary braking subsystem, so that use of a dynamics function can be ensured at low costs, to improve braking safety.

For example, FIG. 9 is a schematic flowchart of another control method for a braking system according to an embodiment of this application. The method 500 may be understood as an extension of the method 400. For example, the method 500 may be performed by a control apparatus, for example, a controller for a braking system. The method 500 may include some or all of the following steps.

S505: Obtain a working status of a braking system.

For example, a status of the braking system may be monitored based on data collected by a sensor in the braking system, braking effect of the braking system, and the like. For example, a working status of a primary pressure supply apparatus may be determined based on information obtained by a motor position sensor 139 or a pressure sensor 134. For another example, a working status of the braking system may be determined based on brake fluid pressure obtained by a pressure sensor 219 or a pressure sensor 154. For another example, a status of the braking system may be determined based on current pressure building time of the braking system and average pressure building time of the braking system. For another example, a working status of a first control unit corresponding to a primary braking subsystem in the braking system may be obtained, or a working status of a second control unit corresponding to an auxiliary braking subsystem may be obtained. It should be understood that a specific manner of obtaining the working status of the braking system is not limited in embodiments of this application.

S510: Determine whether the primary braking subsystem works normally.

For example, whether the primary braking subsystem works normally may be determined based on pressure building time of the braking system.

In an embodiment, whether the primary braking subsystem works normally may be determined based on current pressure building time of the primary braking subsystem and average pressure building time of the primary braking subsystem. For example, when the current pressure building time of the primary braking subsystem is greater than or equal to the average pressure building time of the primary braking subsystem, it may be considered that the primary braking subsystem does not work normally. For another example, when the current pressure building time of the primary braking subsystem is less than or equal to the average pressure building time of the primary braking subsystem, it may be considered that the primary braking subsystem is normal.

In an embodiment, whether the primary braking subsystem works normally may be determined based on pressure of brake fluid at a pressure outlet port of a pressure supply apparatus 130.

When the primary braking subsystem works normally, proceed to step S515, or when the primary braking subsystem does not work normally, proceed to step S520.

S520: Determine whether a redundant sensor fails.

For example, whether a redundant sensor in the primary braking subsystem fails may be determined based on data collected by a plurality of redundant sensors.

In an embodiment, required braking forces may be separately determined based on the data collected by the plurality of redundant sensors. When a difference between the required braking forces determined based on the plurality of sensors is less than or equal to a preset threshold, it may be considered that the plurality of redundant sensors work normally. When the difference between the required braking forces determined based on the plurality of sensors is greater than or equal to the preset threshold, it may be considered that a sensor in the plurality of sensors is faulty.

When the redundant sensor does not fail, proceed to step S530, or when the redundant sensor fails, proceed to step S525.

S525: Obtain a redundant sensor backup.

For example, when it is determined that a sensor in the plurality of redundant sensors fails, a redundant sensor backup may be obtained. Information about a braking force to be applied to a wheel is determined based on the redundant sensor backup. For example, in a driver braking mode, when it is determined that the pressure sensor 154 is faulty, braking force requirement information of a driver may be determined based on data collected by the pressure sensor 218 and a brake pedal stroke sensor 219, and the braking force to be applied to the wheel is determined.

S530: Determine whether an executor or a non-redundant sensor in the primary braking subsystem fails.

For example, it is determined whether a primary pressure increasing module in the primary braking subsystem is faulty. The braking system 300 shown in FIG. 3 is used as an example. It is determined whether a faulty apparatus includes one or more of the following: the motor 132, the hydraulic cylinder 133, the control valve 134, the control valve 137, the control valve 138, the pressure sensor 135, and the motor position sensor 139. In the foregoing braking system, an executor in the primary braking subsystem may be the motor 132, the hydraulic cylinder 133, the control valve 134, the control valve 137, and the control valve 138. A non-redundant sensor may be a sensor other than a redundant sensor, for example, the pressure sensor 135 and the motor position sensor 139.

For example, when the primary braking subsystem includes a pedal feel simulation module, the executor in the primary braking subsystem may further include the pedal feel simulation module.

For example, it is determined whether a fluid inlet valve or a fluid outlet valve or both are faulty. The braking system 300 shown in FIG. 3 is used as an example. It is determined whether a faulty apparatus includes one or more of the following: the fluid inlet valve 9, the fluid inlet valve 10, the fluid inlet valve 11, the fluid inlet valve 12, the fluid outlet valve 13, the fluid outlet valve 14, the fluid outlet valve 15, and the fluid outlet valve 16.

When the executor or the non-redundant sensor or both in the primary braking subsystem fail, proceed to step S532, or when the executor or the non-redundant sensor or both do not fail, proceed to step S540.

S532: Determine whether the auxiliary braking subsystem is normal.

For example, when the auxiliary braking subsystem is normal, proceed to step S534, or when the auxiliary braking subsystem fails, proceed to step S515.

S534: Determine whether intervention of the auxiliary braking subsystem is needed.

For example, whether intervention of the auxiliary braking subsystem is needed may be determined based on a mode in which the braking system is in and a faulty apparatus. The braking system 300 is used as an example. When the braking system is in the active braking mode, and a working status of the braking system indicates that the pedal feel simulation module is faulty and other apparatuses work normally, according to a redundant braking solution in the active braking mode, there may be no need for intervention of the auxiliary braking subsystem. For another example, when a working status of the braking system indicates that a fluid inlet valve is faulty and is in an on state and/or a fluid outlet valve is faulty and is in an off state, degraded use of a dynamics function may be implemented by using the primary braking subsystem, and there may be no need for intervention of the auxiliary braking subsystem. For another example, whether intervention of the auxiliary braking subsystem is needed may be determined according to redundant solutions of the braking system in Scenario 1 and Scenario 2.

For example, when intervention of the auxiliary braking subsystem is needed, proceed to step S536, or when there is no need for intervention of the auxiliary braking subsystem, proceed to step S515.

Step S532 and step S534 may be performed simultaneously, or step S532 may be performed first, or step S534 may be performed first.

S536: The primary braking subsystem and the auxiliary braking subsystem work cooperatively.

Redundant solution 2 in Scenario 1 is used as an example. When the primary pressure increasing module is faulty, pressure of brake fluid in the first section of pipe may be adjusted by using the auxiliary pressure increasing module, and pressure of brake fluid in a brake wheel cylinder may be adjusted by using a fluid inlet valve and/or a fluid outlet valve. The primary braking subsystem and the auxiliary braking subsystem work cooperatively, so that use of a dynamics function can be ensured, and braking safety can be improved at low costs.

S540: Determine whether the auxiliary braking subsystem fails.

For example, when the auxiliary braking subsystem fails, proceed to step S548, or when the auxiliary braking subsystem can work normally, proceed to step S545.

S545: The auxiliary braking subsystem works independently.

For example, when the primary braking subsystem completely fails, for example, according to Redundant solution 4 in Scenario 1, the control unit for the auxiliary braking subsystem may obtain braking force requirement information by using the pressure sensor 218 and the brake pedal stroke sensor 219, and control the auxiliary braking subsystem to act, to adjust pressure of brake fluid in a brake wheel cylinder.

S548: Prompt for use of manual braking.

For example, when both the primary braking subsystem and the auxiliary braking subsystem fail, a user may be prompted to implement a brake function in a manual braking manner. In other words, a redundant backup solution for manual braking in Scenario 3 may be used to provide a braking force for a wheel.

S550: Determine, based on a required braking force, braking forces that the primary braking subsystem and the auxiliary braking subsystem need to provide respectively.

S552: The system enters a pressure increasing process.

S554: The system enters a pressure maintaining process.

S556: The system enters a pressure decreasing process.

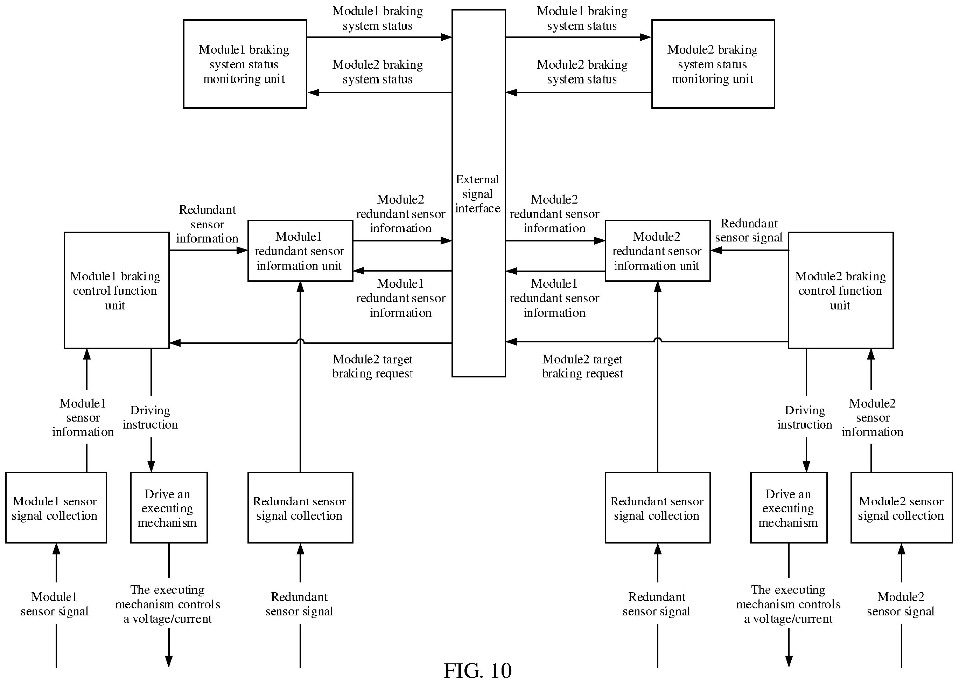

For example, FIG. 10 is a diagram of a system architecture of a braking system according to an embodiment of this application. The following uses the braking system 300 shown in FIG. 3 as an example to describe a system architecture of the braking system 300. The method 400 or the method 500 may be implemented by using the system architecture.

For example, the area 202 includes the auxiliary braking subsystem, the area 204 includes the primary braking subsystem, a control unit for the area 202 may be denoted as a Module1, and a control unit for the area 204 may be denoted as a Module2, as shown in FIG. 10. In this case, the Module2 may control the primary braking subsystem, and may be a first control unit; and the Module1 may control the auxiliary braking subsystem, and may be a second control unit.

For example, the control units for the area 202 and the area 204 may include a braking system status detection unit, to detect a working status of an apparatus in a corresponding area. For example, a Module1 braking system status detection unit and a Module2 braking system status detection unit may be configured to detect working statuses of apparatuses in the area 202 and the area 204 respectively, and may be configured to determine whether executors and sensors included in the area 202 and the area 204 are faulty.

In an embodiment, when the Module1 braking system status detection unit and the Module2 braking system status detection unit are located in different controllers, the Module1 braking system status detection unit and the Module2 braking system status detection unit may communicate with each other through an external signal interface. For example, the Module1 braking system status detection unit may send Module1 braking system status information to the Module2 braking system status detection unit through the external signal interface, to indicate the working statuses of the apparatuses in the area 202 obtained by the Module1 braking system status detection unit, as shown in FIG. 10. For another example, when the Module1 braking system status detection unit and the Module2 braking system status detection unit are located in a same controller, the Module1 braking system status detection unit and the Module2 braking system status detection unit may exchange information with each other through an internal communication circuit.

For example, because the area 202 and the area 204 may include a redundant sensor, the control units for the area 202 and the area 204 may include a redundant sensor information unit, to obtain braking force requirement information of a driver.

In an embodiment, a Module1 redundant sensor information unit and a Module2 redundant sensor information unit may be configured to obtain information about a redundant sensor in a corresponding area. For example, the Module1 redundant sensor information unit may be configured to obtain information collected by the pressure sensor 218 and the brake pedal stroke sensor 219 in the area 202. The Module2 redundant sensor information unit may be configured to obtain information collected by the pressure sensor 154 in the area 204. For another example, when the Module1 redundant sensor information unit and the Module2 redundant sensor information unit are in different controllers, the Module1 redundant sensor information unit and the Module2 redundant sensor information unit may communicate with each other through an external signal interface, as shown in FIG. 10. For another example, the Module1 may obtain, through an external signal interface, redundant sensor information required by the Module1 (for example, denoted as Module1 redundant sensor information), and the Module2 may obtain redundant sensor information required by the Module2 (for example, denoted as Module2 redundant sensor information).

For example, the control units for the area 202 and the area 204 may include a braking control function unit, to control an executor in the area, so as to implement a brake function.

In an embodiment, a Module1 braking control function unit and a Module2 braking control function unit may be configured to control an executor in a corresponding area, and may be configured to obtain a sensor signal in the corresponding area. The area 204 shown in FIG. 3 is used as an example. The Module2 braking control function unit may be configured to control the primary pressure supply apparatus (the motor 132 and the hydraulic cylinder 133), the control valves (134, 137, and 138), the fluid inlet valves (9, 10, 11, and 12), and the fluid outlet valves (13, 14, 15, and 16) in the area 204 to act, may be configured to control the isolation valves (117 and 118) to act, and may be configured to obtain data collected by the pressure sensor 135 and the motor position sensor 139. Similarly, the Module1 braking control function unit may be configured to control an executor in the area 202 to act.

In another embodiment, when the Module1 braking control function unit and the Module2 braking control function unit are in different controllers, the Module1 braking control function unit and the Module2 braking control function unit may communicate with each other through an external signal interface. The area 204 shown in FIG. 3 is used as an example. The Module2 braking control function unit may send a target braking request through the external signal interface, so that the Module 1 braking control function unit can control, based on the target braking request, an executor in the primary braking subsystem in the area to act. For example, Redundant solution 2 in Scenario 1 may be implemented in this manner.

For example, a braking system status detection unit, a redundant sensor information unit, and a braking control function unit that correspond to a same area may be in a same controller. For example, an ECU1 may include the Module1 braking system status detection unit, the Module1 redundant sensor information unit, and the Module1 braking control function unit. In this case, the ECU1 may be used as the second control unit. For another example, the first control unit and the second control unit may be disposed in a same control apparatus.

In some possible implementations, with the use of the system architecture, the method shown in FIG. 8 may be performed by the first control unit. For example, the foregoing ECU2 is the first control unit, and the first control unit may perform the method shown in FIG. 8. Alternatively, the method may be performed by a control apparatus including the first control unit, for example, may be performed by a control apparatus including the ECU2. Alternatively, the method may be performed by a control apparatus that can communicate with the first control unit. For example, the method may be performed by the ECU1 or a control apparatus including the ECU1.

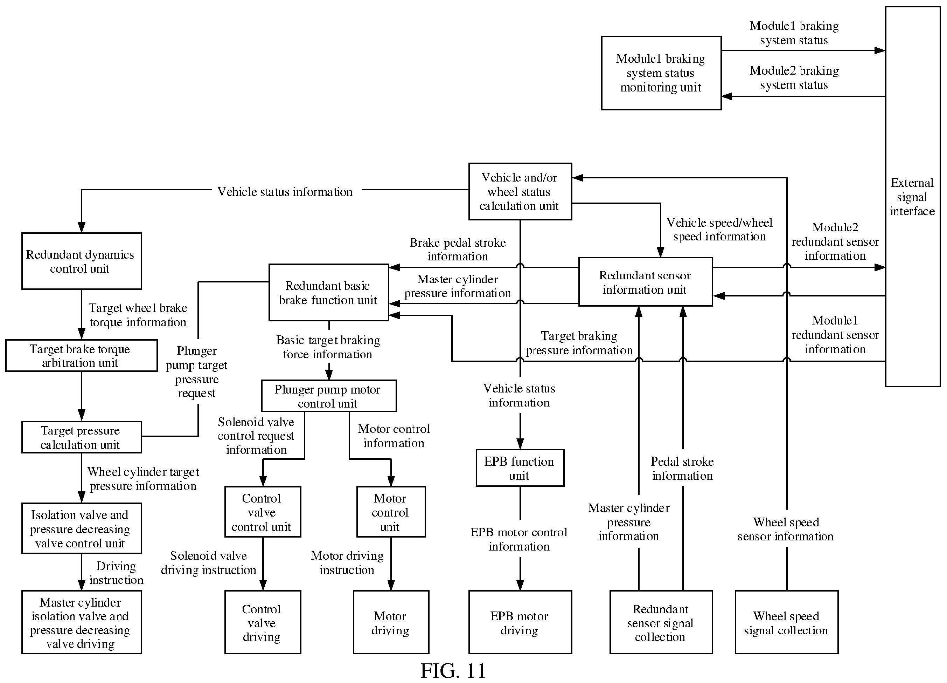

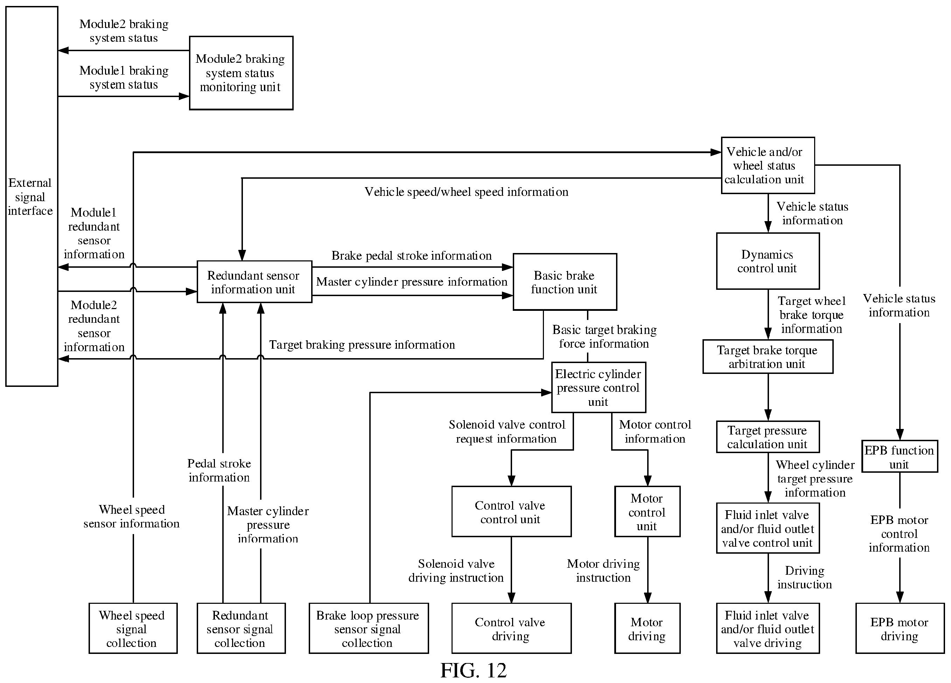

The following uses the braking system 300 shown in FIG. 3 as an example to describe a control manner of the control unit for the area 202 or the area 204 with reference to FIG. 11 and FIG. 12. For example, FIG. 11 is a diagram of a control unit for an auxiliary braking subsystem according to an embodiment of this application.

For example, the auxiliary braking subsystem is in the area 202, and a redundant sensor information unit may be the Module1 redundant sensor information unit shown in FIG. 10. The braking system 300 shown in FIG. 3 is used as an example. The redundant sensor information unit may obtain master cylinder pressure information collected by the pressure sensors (218 and 154), and may obtain brake pedal stroke information collected by the brake pedal stroke sensor 219, and whether a redundant sensor works normally may be determined accordingly. The redundant sensor information unit may receive or send redundant sensor information, for example, the master cylinder pressure information and the brake pedal stroke information, through an external signal interface.

For example, the control unit for the area 202 may include a redundant basic brake function unit, configured to determine braking force requirement information based on the brake pedal stroke information and/or the master cylinder pressure information, and control an executor to implement a basic brake function. The redundant basic brake function unit may further receive target braking pressure information through an external signal interface, to control an executor to implement a basic brake function (basic brake function, BBF). Controlling an executor to act may be driving, by using another unit or module, the executor to act.

In an embodiment, that the auxiliary braking subsystem is in the area 202 is used as an example. The redundant basic brake function unit may be in the Module1 braking control function unit shown in FIG. 10. The redundant basic brake function unit may implement the basic brake function by determining the braking force requirement information. For example, the redundant basic brake function unit may indicate basic target braking force information. For another example, a plunger pump motor control unit may drive, based on the basic target braking force information by using a motor control unit, the motor 163 to act, to drive the plunger pump 161 and the plunger pump 162. For another example, the plunger pump motor control unit may drive, based on the basic target braking force information by using a control valve control unit, the control valve 115 and the control valve 116 to act. In this case, pressure of brake fluid in brake wheel cylinders may be adjusted by adjusting pressure of brake fluid in the third fluid inlet pipe 51 and the fourth fluid inlet pipe 52.

For example, the control unit for the area 202 may include a vehicle and/or wheel status calculation unit, configured to determine vehicle status information and/or wheel status information, so that in an active braking mode, braking force requirement information can be determined based on the vehicle status information and/or the wheel status information, and a braking force to be applied to a wheel is determined accordingly.

For example, based on the vehicle status information, an electrical park brake (electrical park brake, EPB) function unit may be used to drive an EPB motor to act, to implement an EPB function.

For example, the control unit for the area 202 may include a redundant dynamics control unit, configured to determine target wheel brake torque information, to implement a dynamics function. A target wheel is a wheel that needs to be controlled for implementing a dynamics function, and the target wheel brake torque information may be brake torque required by the target wheel for implementing the dynamics function. A target braking torque arbitration unit may be configured to determine whether the target wheel brake torque information is proper. For example, it is determined whether vehicle safety is affected when a braking force is applied to a vehicle based on the target wheel brake torque information. For another example, when the brake torque is not proper, the brake torque may be corrected. A target pressure calculation unit may determine, based on the brake torque, a braking force to be applied to the target wheel, and may determine pressure of brake fluid in a brake wheel cylinder based on an association relationship between a braking force and brake fluid pressure. In this case, the pressure of the brake fluid in the brake wheel cylinder may be increased by using a redundant basic brake unit. An isolation valve and pressure decreasing valve control unit may be used to control the isolation valves (213 and 214) and/or the pressure decreasing valves (113 and 114) to act, to decrease pressure of brake fluid in brake wheel cylinders. In this manner, degraded use of a dynamics function can be implemented.

The braking system 300 shown in FIG. 3 is used as an example. The second control unit controls the motor 163 and/or the control valves (113, 114, 115, 116, 213, and 214), and braking forces applied to the first group of wheels 121 and the second group of wheels 122 may be adjusted by using the auxiliary braking subsystem, so that functions of a degraded ABS, degraded AEB, and the like can be implemented.

For example, FIG. 12 is a diagram of a structure of a control unit for a primary braking subsystem according to an embodiment of this application.

For example, the primary braking subsystem is in the area 204, and a redundant sensor information unit may be the Module2 redundant sensor information unit shown in FIG. 10.

In an embodiment, the redundant sensor information unit may obtain master cylinder pressure information collected by the pressure sensor 154, and may obtain brake pedal stroke information collected by the brake pedal stroke sensor 219.

For example, the control unit for the area 204 may include a basic brake function unit, configured to control, based on braking force requirement information of a driver, executors such as a motor and a control valve to act, to implement a basic brake function.

In an embodiment, that the primary braking subsystem is in the area 204 is used as an example. The basic brake function unit may be in the Module2 braking control function unit shown in FIG. 10. For example, the basic brake function unit may determine basic target braking force information. An electric cylinder pressure control unit may control, based on the basic target braking force information, the motor 132 to drive the hydraulic cylinder 133 to act, and may drive the control valves (134, 137, 138, 117, and 118) to act. For another example, the electric cylinder pressure control unit may control, based on pressure of brake fluid in a brake loop collected by the pressure sensor 134, the motor 132 and/or the control valves (134, 137, 138, 117, and 118) to act.

In another embodiment, the control unit for the area 204 may include a dynamics control unit, configured to determine target wheel brake torque information based on vehicle status information, to implement a dynamics function. A target brake torque arbitration unit may determine whether the target wheel brake torque information is proper. A target pressure calculation unit may determine, based on brake torque of a target wheel, pressure of brake fluid in a brake wheel cylinder of the wheel. In this case, brake wheel cylinders are separately controlled by controlling the fluid inlet valves (9, 10, 11, and 12) and/or the fluid outlet valves (13, 14, 15, and 16). In this way, dynamics functions such as an ABS, AEB, ACC, ECS, and a TCS can be implemented. For example, the dynamics control unit may be in the Module2 braking control function unit shown in FIG. 10.

In another embodiment, an EPB function may be implemented based on vehicle status information by using an EPB function unit.

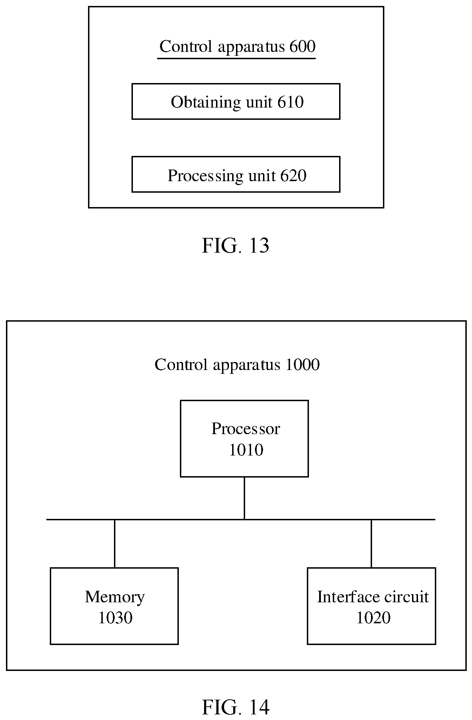

An embodiment of this application further provides an apparatus configured to implement any one of the foregoing control methods. For example, the apparatus includes units configured to implement steps performed by a chip, a controller, a braking system, and the like in any one of the foregoing methods. For example, FIG. 13 is a diagram of a structure of a control apparatus for a braking system according to a non-claimed embodiment of this application. The braking system includes a primary braking subsystem and an auxiliary braking subsystem, and the primary braking subsystem is controlled by a first control unit. The apparatus 600 may include an obtaining unit 610 and a processing unit 620.

The obtaining unit 610 may be configured to obtain a working status of the first control unit and the primary braking subsystem. The processing unit 620 may be configured to: when the working status indicates that the first control unit works normally and an apparatus in the primary braking subsystem is faulty, control, by using the first control unit, an apparatus other than the faulty apparatus in the primary braking subsystem to adjust pressure of brake fluid in a brake wheel cylinder.

Optionally, the braking system is in a driver braking mode, the primary braking subsystem includes a first sensor, the auxiliary braking subsystem includes a second sensor, and the first sensor and the second sensor may be configured to obtain braking force requirement information of a driver. The processing unit 620 may be further configured to determine information about a braking force based on the braking force requirement information obtained by the second sensor. The processing unit 620 may be configured to: when the working status indicates that the first sensor is faulty, control, based on the information about the braking force by using the first control unit, an apparatus other than the first sensor in the primary braking subsystem to adjust the pressure of the brake fluid in the brake wheel cylinder.

Optionally, the braking system is in an active braking mode, the primary braking subsystem includes a first sensor, the auxiliary braking subsystem includes a second sensor, and the first sensor and the second sensor may be configured to obtain braking force requirement information of a driver. The processing unit 620 may be further configured to determine braking force requirement information based on a running status and/or surrounding environment information of a vehicle. The processing unit 620 may be configured to: when the working status indicates that the first sensor is faulty, control, based on the braking force requirement information by using the first control unit, an apparatus other than the first sensor in the primary braking subsystem to adjust the pressure of the brake fluid in the brake wheel cylinder.

Optionally, the primary braking subsystem includes a primary pressure increasing module, and a fluid inlet valve and/or a fluid outlet valve. The primary pressure increasing module is configured to adjust pressure of brake fluid in a first section of pipe. The first section of pipe is a brake pipe between the primary pressure increasing module and the fluid inlet valve. When the fluid inlet valve is in an on state, the first section of pipe communicates with the brake wheel cylinder. The auxiliary braking subsystem includes an auxiliary pressure increasing module, and the auxiliary pressure increasing module is configured to adjust the pressure of the brake fluid in the first section of pipe. The processing unit 620 may be configured to: when the working status indicates that the primary pressure increasing module is faulty, adjust the pressure of the brake fluid in the first section of pipe by using the auxiliary pressure increasing module, and control, by using the first control unit, the fluid inlet valve and/or the fluid outlet valve to adjust the pressure of the brake fluid in the brake wheel cylinder.

Optionally, the primary pressure increasing module includes a primary pressure supply apparatus, a first control valve, and a third sensor. The first control valve is configured to connect the primary pressure supply apparatus to the first section of pipe, the primary pressure increasing module adjusts the pressure of the brake fluid in the first section of pipe by using the primary pressure supply apparatus, and the third sensor is configured to sense a running status of the primary pressure supply apparatus. That the working status indicates that the primary pressure increasing module is faulty includes: the working status indicates that at least one of the primary pressure supply apparatus, the first control valve, and the third sensor is faulty.

Optionally, the primary braking subsystem includes a primary pressure increasing module, and a fluid inlet valve and/or a fluid outlet valve. The primary pressure increasing module is configured to adjust pressure of brake fluid in a first section of pipe, the first section of pipe is a brake pipe between the primary pressure increasing module and the fluid inlet valve, and when the fluid inlet valve is in an on state, the first section of pipe communicates with the brake wheel cylinder. The processing unit 620 may be configured to: when the working status indicates that the fluid inlet valve is faulty and the fluid inlet valve is in the on state, and/or the fluid outlet valve is faulty and the fluid outlet valve is in an off state, control, by using the first control unit, the primary pressure increasing module to adjust the pressure of the brake fluid in the brake wheel cylinder.

For example, because the fluid inlet valve is in the on state, the first section of pipe communicates with the brake wheel cylinder, and the primary pressure increasing module may adjust the pressure of the brake fluid in the brake wheel cylinder by adjusting the pressure of the brake fluid in the first section of pipe.

Optionally, the braking system is in an active braking mode, the primary braking subsystem includes a pedal feel simulation module, and the pedal feel simulation module is configured to provide a pedal feel for a driver. The processing unit 620 may be further configured to determine braking force requirement information based on a running status and/or surrounding environment information of a vehicle. The processing unit 620 may be configured to: when the working status indicates that the pedal feel simulation module is faulty, control, based on the braking force requirement information by using the first control unit, an apparatus other than the pedal feel simulation module in the primary braking subsystem to adjust the pressure of the brake fluid in the brake wheel cylinder.

Optionally, the auxiliary braking subsystem may be controlled by a second control unit, and the processing unit 620 may be further configured to: when the first control unit is faulty, control, by using the second control unit, the auxiliary braking subsystem to adjust the pressure of the brake fluid in the brake wheel cylinder.

It should be understood that division into units of the foregoing apparatus is merely logical function division, and during actual implementation, all or some of the units may be integrated into a physical entity, or the units may be physically separated. In addition, a unit in the apparatus may be implemented in a form of software invoked by a processor. For example, the apparatus includes a processor, the processor is connected to a memory, the memory stores an instruction, and the processor invokes the instruction stored in the memory, to implement any one of the foregoing methods or implement functions of the units in the apparatus. The processor is, for example, a general-purpose processor, such as a central processing unit (central processing unit, CPU), a microprocessor, a graphics processing unit (graphics processing unit, GPU) (which may be understood as a microprocessor), or a digital signal processor (digital signal processor, DSP). The memory is a memory inside the apparatus or a memory outside the apparatus. Alternatively, a unit in the apparatus may be implemented in a form of hardware circuit, and functions of some or all of the units may be implemented by designing the hardware circuit. The hardware circuit may be understood as one or more processors. For example, in an implementation, the hardware circuit is a processor, and is an application-specific integrated circuit (application-specific integrated circuit, ASIC), and functions of some or all of the units are implemented by designing a logical relationship between elements in the circuit. For another example, in another implementation, the hardware circuit may be implemented by using a programmable logic device (programmable logic device, PLD), for example, a field programmable gate array (Field Programmable Gate Array, FPGA), and the field programmable gate array may include a large quantity of logic gate circuits, and a connection relationship between the logic gate circuits is configured by using a configuration file, to implement functions of some or all of the units. In addition, the hardware circuit may be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU).

All the units of the foregoing apparatus may be implemented in the form of software invoked by the processor or may be implemented in the form of hardware circuit, or some of the units are implemented in the form of software invoked by the processor, and remaining units are implemented in the form of hardware circuit.

For example, FIG. 14 is a block diagram of another control apparatus according to an embodiment of this application. The apparatus 1000 may include a processor 1010, an interface circuit 1020, and a memory 1030. The processor 1010, the interface circuit 1020, and the memory 1030 are connected by using an internal connection path. The memory 1030 is configured to store an instruction, and the processor 1010 is configured to execute the instruction stored in the memory 1030, so that the interface circuit 1020 receives/sends some parameters. Optionally, the memory 1030 may be coupled to the processor 1010 through an interface, or may be integrated with the processor 1010.

It should be noted that the interface circuit 1020 may include but is not limited to a transceiver apparatus like an input/output interface (input/output interface), to implement communication between the apparatus 1000 and another device or a communication network. For example, information collected by a sensor may be obtained through the interface circuit 1020, to control an executor such as a control valve to perform a corresponding operation and the like.

A non-claimed embodiment of this application further provides a computer program product. The computer program product includes computer program code. When the computer program code is run on a computer, the computer is enabled to perform the method 400 or the method 500 and any possible implementation of the method 400 or the method 500.

A non-claimed embodiment of this application further provides a chip, including a circuit, configured to perform the method 400 or the method 500 in embodiments of this application and any possible implementation of the method 400 or the method 500.

A non-claimed embodiment of this application further provides a control system, including a primary braking subsystem, an auxiliary braking subsystem, and the control apparatus 600 or the control apparatus 1000 and any possible implementation of the control apparatus 600 or the control apparatus 1000.

An embodiment of this application further provides a vehicle, including the control apparatus 600 or the control apparatus 1000, or including the foregoing control system.

It should be understood that, for the purpose of convenient and brief description, for a detailed working process and beneficial effects of the foregoing system, apparatus, and unit, reference may be made to a corresponding process in the foregoing method embodiments. Details are not described herein again.

## Claims

1. A control method for a braking system (300), wherein the braking system (300) comprises a primary braking subsystem (100) and an auxiliary braking subsystem (200), the primary braking subsystem (100) is controlled by a first control unit, and the method comprises:
obtaining (S410) a working status of the first control unit and the primary braking subsystem (100); and
when the working status indicates that the first control unit works normally and an apparatus in the primary braking subsystem (100) is faulty, controlling (S420), by using the first control unit, an apparatus other than the faulty apparatus in the primary braking subsystem (100) to adjust pressure of brake fluid in a brake wheel cylinder (17, 18, 19, 20);
wherein
the primary braking subsystem (100) comprises a first sensor (154), and the first sensor (154) is configured to obtain braking force requirement information of a driver;
**characterized in that** the braking system (300) is in an active braking mode, and
**in that** the method further comprises:
determining braking force requirement information based on a running status and/or surrounding environment information of a vehicle; and
the controlling (S420), by using the first control unit, an apparatus other than the faulty apparatus in the primary braking subsystem (100) to adjust pressure of brake fluid in a brake wheel cylinder (17, 18, 19, 20) comprises:
when the working status indicates that the first sensor (154) is faulty, controlling, based on the braking force requirement information by using the first control unit, an apparatus other than the first sensor (154) in the primary braking subsystem (100) to adjust the pressure.

2. The method according to claim 1, wherein
the primary braking subsystem (100) comprises a primary pressure increasing module (130), a fluid inlet valve, and a fluid outlet valve;
the primary pressure increasing module (130) is configured to adjust pressure of brake fluid in a first section of pipe, the first section of pipe is a brake pipe between the primary pressure increasing module (130) and the fluid inlet valve, and when the fluid inlet valve is in an on state, the first section of pipe communicates with the brake wheel cylinder (17, 18, 19, 20);
the auxiliary braking subsystem (200) comprises an auxiliary pressure increasing module (160), and the auxiliary pressure increasing module (160) is configured to adjust the pressure of the brake fluid in the first section of pipe; and
the controlling (S420), by using the first control unit, an apparatus other than the faulty apparatus in the primary braking subsystem (100) to adjust pressure of brake fluid in a brake wheel cylinder (17, 18, 19, 20) comprises:
when the working status indicates that the primary pressure increasing module (130) is faulty, adjusting the pressure of the brake fluid in the first section of pipe by using the auxiliary pressure increasing module (160), and controlling, by using the first control unit, the fluid inlet valve and/or the fluid outlet valve to adjust the pressure.

3. The method according to claim 2, wherein the primary pressure increasing module (130) comprises a primary pressure supply apparatus, a first control valve, and a third sensor;
the first control valve is configured to connect the primary pressure supply apparatus to the first section of pipe;
the primary pressure increasing module (130) adjusts the pressure of the brake fluid in the first section of pipe by using the primary pressure supply apparatus;
the third sensor is configured to sense a running status of the primary pressure supply apparatus; and
that the working status indicates that the primary pressure increasing module (130) is faulty comprises: the working status indicates that at least one of the primary pressure supply apparatus, the first control valve, and the third sensor is faulty.

4. The method according to claim 1, wherein
the primary braking subsystem (100) comprises a primary pressure increasing module (130), a fluid inlet valve, and a fluid outlet valve;
the primary pressure increasing module (130) is configured to adjust pressure of brake fluid in a first section of pipe, the first section of pipe is a brake pipe between the primary pressure increasing module (130) and the fluid inlet valve, and when the fluid inlet valve is in an on state, the first section of pipe communicates with the brake wheel cylinder (17, 18, 19, 20); and
the controlling (S420), by using the first control unit, an apparatus other than the faulty apparatus in the primary braking subsystem (100) to adjust pressure of brake fluid in a brake wheel cylinder (17, 18, 19, 20) comprises:
when the working status indicates that the fluid inlet valve is faulty and the fluid inlet valve is in the on state, and/or the fluid outlet valve is faulty and the fluid outlet valve is in an off state, controlling, by using the first control unit, the primary pressure increasing module (130) to adjust the pressure.

5. The method according to claim 1, wherein
the braking system (300) is in an active braking mode;
the primary braking subsystem (100) comprises a pedal feel simulation module, and the pedal feel simulation module (151) is configured to provide a pedal feel for a driver;
the method further comprises:
determining braking force requirement information based on a running status and/or surrounding environment information of a vehicle; and
the controlling (S420), by using the first control unit, an apparatus other than the faulty apparatus in the primary braking subsystem (100) to adjust pressure of brake fluid in a brake wheel cylinder (17, 18, 19, 20) comprises:
when the working status indicates that the pedal feel simulation module (151) is faulty, controlling, based on the braking force requirement information by using the first control unit, an apparatus other than the pedal feel simulation module (151) in the primary braking subsystem (100) to adjust the pressure.

6. The method according to any one of claims 1 to 5, wherein the auxiliary braking subsystem (200) is controlled by a second control unit, and the method further comprises:
when the first control unit is faulty, controlling, by using the second control unit, the auxiliary braking subsystem (200) to adjust the pressure.

7. A control apparatus (620) for a braking system (300), wherein the braking system (300) comprises a primary braking subsystem (100) and an auxiliary braking subsystem (200), the primary braking subsystem (100) is controlled by a first control unit, and the apparatus comprises:
an obtaining unit, configured to obtain a working status of the first control unit and the primary braking subsystem (100); and
a processing unit, configured to: when the working status indicates that the first control unit works normally and an apparatus in the primary braking subsystem (100) is faulty, control, by using the first control unit, an apparatus other than the faulty apparatus in the primary braking subsystem (100) to adjust pressure of brake fluid in a brake wheel cylinder (17, 18, 19, 20),
**characterized in that** the braking system (300) comprises an active braking mode;
the primary braking subsystem (100) comprises a first sensor (154), and the first sensor (154) is configured to obtain braking force requirement information of a driver when the braking system (300) is in the active braking mode;
the processing unit is further configured to:
determine braking force requirement information based on a running status and/or surrounding environment information of a vehicle; and
the processing unit is configured to:
when the working status indicates that the first sensor (154) is faulty, control, based on the braking force requirement information by using the first control unit, an apparatus other than the first sensor (154) in the primary braking subsystem (100) to adjust the pressure.

8. The apparatus (620) according to claim 7, wherein
the braking system (300) comprises a driver braking mode;
the primary braking subsystem (100) comprises a first sensor (154), the auxiliary braking subsystem (200) comprises a second sensor, and the first sensor (154) and the second sensor are configured to obtain braking force requirement information of a driver; and
the processing unit is configured to:
determine information about a braking force based on the braking force requirement information obtained by the second sensor when the braking system (300) is in the driver braking mode; and
when the working status indicates that the first sensor (154) is faulty, control, based on the information about the braking force by using the first control unit, an apparatus other than the first sensor (154) in the primary braking subsystem (100) to adjust the pressure.

9. The apparatus (620) according to any one of claims 7 to 8, wherein
the primary braking subsystem (100) comprises a primary pressure increasing module (130), a fluid inlet valve, and a fluid outlet valve;
the primary pressure increasing module (130) is configured to adjust pressure of brake fluid in a first section of pipe, the first section of pipe is a brake pipe between the primary pressure increasing module (130) and the fluid inlet valve, and when the fluid inlet valve is in an on state, the first section of pipe communicates with the brake wheel cylinder (17, 18, 19, 20);
the auxiliary braking subsystem (200) comprises an auxiliary pressure increasing module (160), and the auxiliary pressure increasing module (160) is configured to adjust the pressure of the brake fluid in the first section of pipe; and
the processing unit is configured to:
when the working status indicates that the primary pressure increasing module (130) is faulty, adjust the pressure of the brake fluid in the first section of pipe by using the auxiliary pressure increasing module (160), and control, by using the first control unit, the fluid inlet valve and/or the fluid outlet valve to adjust the pressure.

10. The apparatus (620) according to claim 9, wherein the primary pressure increasing module (130) comprises a primary pressure supply apparatus, a first control valve, and a third sensor;
the first control valve is configured to connect the primary pressure supply apparatus to the first section of pipe;
the primary pressure increasing module (130) adjusts the pressure of the brake fluid in the first section of pipe by using the primary pressure supply apparatus;
the third sensor is configured to sense a running status of the primary pressure supply apparatus; and
that the working status indicates that the primary pressure increasing module (130) is faulty comprises: the working status indicates that at least one of the primary pressure supply apparatus, the first control valve, and the third sensor is faulty.

11. The apparatus (620) according to any one of claims 7 to 8, wherein
the primary braking subsystem (100) comprises a primary pressure increasing module (130), a fluid inlet valve, and a fluid outlet valve;
the primary pressure increasing module (130) is configured to adjust pressure of brake fluid in a first section of pipe, the first section of pipe is a brake pipe between the primary pressure increasing module (130) and the fluid inlet valve, and when the fluid inlet valve is in an on state, the first section of pipe communicates with the brake wheel cylinder (17, 18, 19, 20); and
the processing unit is configured to:
when the working status indicates that the fluid inlet valve is faulty and the fluid inlet valve is in the on state, and/or the fluid outlet valve is faulty and the fluid outlet valve is in an off state, control, by using the first control unit, the primary pressure increasing module (130) to adjust the pressure.

12. The apparatus (620) according to claim 7, wherein
the braking system (300) is in an active braking mode;
the primary braking subsystem (100) comprises a pedal feel simulation module (151), and the pedal feel simulation module (151) is configured to provide a pedal feel for a driver;
the processing unit is further configured to:
determine braking force requirement information based on a running status and/or surrounding environment information of a vehicle; and
the processing unit is configured to:
when the working status indicates that the pedal feel simulation module (151) is faulty, control, based on the braking force requirement information by using the first control unit, an apparatus other than the pedal feel simulation module (151) in the primary braking subsystem (100) to adjust the pressure.

13. A control apparatus (1000), comprising:
a memory (1030), configured to store a computer program; and
a processor (1020), configured to execute the computer program stored in the memory, to enable the apparatus (1000) to perform the method according to any one of claims 1 to 6.

14. A vehicle, comprising the control apparatus (620) according to any one of claims 7 to 13.

15. A computer-readable storage medium, wherein the computer-readable storage medium stores a computer program, and when the computer program is executed by a computer, the control method according to any one of claims 1 to 6 is implemented

## Patentansprüche

1. Steuerungsverfahren für ein Bremssystem (300), wobei das Bremssystem (300) ein primäres Bremsteilsystem (100) und ein Hilfsbremsteilsystem (200) umfasst, das primäre Bremsteilsystem (100) durch eine erste Steuereinheit gesteuert wird und das Verfahren Folgendes umfasst:
Erlangen (S410) eines Arbeitsstatus der ersten Steuereinheit und des primären Bremsteilsystems (100); und
wenn der Arbeitsstatus anzeigt, dass die erste Steuereinheit normal arbeitet und eine Vorrichtung in dem primären Bremsteilsystem (100) fehlerhaft ist, Steuern (S420) einer anderen Vorrichtung als der fehlerhaften Vorrichtung in dem primären Bremsteilsystem (100) unter Verwendung der ersten Steuereinheit, um den Druck von Bremsfluid in einem Bremsradzylinder (17, 18, 19, 20) einzustellen;
wobei
das primäre Bremsteilsystem (100) einen ersten Sensor (154) umfasst, und der erste Sensor (154) dazu konfiguriert ist, Informationen über Bremskraftanforderungen eines Fahrers zu erlangen;
**dadurch gekennzeichnet, dass** sich das Bremssystem (300) in einem aktiven Bremsmodus befindet, und
dadurch, dass das Verfahren ferner Folgendes umfasst:
Bestimmen von Informationen über Bremskraftanforderungen basierend auf einem Betriebsstatus und/oder Umgebungsinformationen eines Fahrzeugs; und
das Steuern (S420) einer anderen Vorrichtung als der fehlerhaften Vorrichtung in dem primären Bremsteilsystem (100) unter Verwendung der ersten Steuereinheit, um den Druck von Bremsfluid in einem Bremsradzylinder (17, 18, 19, 20) einzustellen, Folgendes umfasst:
wenn der Arbeitsstatus anzeigt, dass der erste Sensor (154) fehlerhaft ist, Steuern einer anderen Vorrichtung als dem ersten Sensor (154) in dem primären Bremsteilsystem (100) basierend auf den Informationen über Bremskraftanforderungen unter Verwendung der ersten Steuereinheit, um den Druck einzustellen.

2. Verfahren nach Anspruch 1, wobei
das primäre Bremsteilsystem (100) ein primäres Druckerhöhungsmodul (130), ein Fluideinlassventil und ein Fluidauslassventil umfasst;
das primäre Druckerhöhungsmodul (130) dazu konfiguriert ist, den Druck von Bremsfluid in einem ersten Leitungsabschnitt einzustellen, der erste Leitungsabschnitt eine Bremsleitung zwischen dem primären Druckerhöhungsmodul (130) und dem Fluideinlassventil ist, und, wenn sich das Fluideinlassventil in einem Ein-Zustand befindet, der erste Leitungsabschnitt mit dem Bremsradzylinder (17, 18, 19, 20) in Verbindung steht;
das Hilfsbremsteilsystem (200) ein Hilfsdruckerhöhungsmodul (160) umfasst, und das Hilfsdruckerhöhungsmodul (160) dazu konfiguriert ist, den Druck des Bremsfluids in dem ersten Leitungsabschnitt einzustellen; und
das Steuern (S420) einer anderen Vorrichtung als der fehlerhaften Vorrichtung in dem primären Bremsteilsystem (100) unter Verwendung der ersten Steuereinheit, um den Druck von Bremsfluid in einem Bremsradzylinder (17, 18, 19, 20) einzustellen, Folgendes umfasst:
wenn der Arbeitsstatus anzeigt, dass das primäre Druckerhöhungsmodul (130) fehlerhaft ist, Einstellen des Drucks des Bremsfluids in dem ersten Leitungsabschnitt unter Verwendung des Hilfsdruckerhöhungsmoduls (160) und Steuern des Fluid-Einlassventils und/oder des Fluid-Auslassventils unter Verwendung der ersten Steuereinheit, um den Druck einzustellen.

3. Verfahren nach Anspruch 2, wobei das primäre Druckerhöhungsmodul (130) eine primäre Druckversorgungsvorrichtung, ein erstes Steuerventil und einen dritten Sensor umfasst;
das erste Steuerventil dazu konfiguriert ist, die primäre Druckversorgungsvorrichtung mit dem ersten Leitungsabschnitt zu verbinden;
das primäre Druckerhöhungsmodul (130) den Druck des Bremsfluids in dem ersten Leitungsabschnitt unter Verwendung der primären Druckversorgungsvorrichtung einstellt;
der dritte Sensor dazu konfiguriert ist, einen Betriebsstatus der primären Druckversorgungsvorrichtung zu erfassen; und
der Umstand, dass der Arbeitsstatus anzeigt, dass das primäre Druckerhöhungsmodul (130) fehlerhaft ist, Folgendes umfasst: der Arbeitsstatus zeigt an, dass mindestens eine der primären Druckversorgungsvorrichtung, des ersten Steuerventils oder des dritten Sensors fehlerhaft ist.

4. Verfahren nach Anspruch 1, wobei
das primäre Bremsteilsystem (100) ein primäres Druckerhöhungsmodul (130), ein Fluideinlassventil und ein Fluidauslassventil umfasst;
das primäre Druckerhöhungsmodul (130) dazu konfiguriert ist, den Druck von Bremsfluid in einem ersten Leitungsabschnitt einzustellen, der erste Leitungsabschnitt eine Bremsleitung zwischen dem primären Druckerhöhungsmodul (130) und dem Fluideinlassventil ist, und, wenn sich das Fluideinlassventil in einem Ein-Zustand befindet, der erste Leitungsabschnitt mit dem Bremsradzylinder (17, 18, 19, 20) in Verbindung steht; und das Steuern (S420) einer anderen Vorrichtung als der fehlerhaften Vorrichtung in dem primären Bremsteilsystem (100) unter Verwendung der ersten Steuereinheit, um den Druck von Bremsfluid in einem Bremsradzylinder (17, 18, 19, 20) einzustellen, Folgendes umfasst:
wenn der Arbeitsstatus anzeigt, dass das Fluideinlassventil fehlerhaft ist und sich das Fluideinlassventil in dem Ein-Zustand befindet, und/oder das Fluid-Auslassventil fehlerhaft ist und sich das Fluid-Auslassventil in einem Aus-Zustand befindet, Steuern des primären Druckerhöhungsmoduls (130) unter Verwendung der ersten Steuereinheit, um den Druck einzustellen.

5. Verfahren nach Anspruch 1, wobei
sich das Bremssystem (300) in einem aktiven Bremsmodus befindet; das primäre Bremsteilsystem (100) ein Pedalgefühl-Simulationsmodul umfasst, und das Pedalgefühl-Simulationsmodul (151) dazu konfiguriert ist, ein Pedalgefühl für einen Fahrer bereitzustellen;
das Verfahren ferner Folgendes umfasst:
Bestimmen von Informationen über Bremskraftanforderungen basierend auf einem Betriebsstatus und/oder Umgebungsinformationen eines Fahrzeugs; und
das Steuern (S420) einer anderen Vorrichtung als der fehlerhaften Vorrichtung in dem primären Bremsteilsystem (100) unter Verwendung der ersten Steuereinheit, um den Druck von Bremsfluid in einem Bremsradzylinder (17, 18, 19, 20) einzustellen, Folgendes umfasst:
wenn der Arbeitsstatus anzeigt, dass das Pedalgefühl-Simulationsmodul (151) fehlerhaft ist, Steuern einer anderen Vorrichtung als dem Pedalgefühl-Simulationsmodul (151) in dem primären Bremsteilsystem (100) basierend auf den Informationen über Bremskraftanforderungen unter Verwendung der ersten Steuereinheit, um den Druck einzustellen.

6. Verfahren nach einem der Ansprüche 1 bis 5, wobei das Hilfsbremsteilsystem (200) durch eine zweite Steuereinheit gesteuert wird, und das Verfahren ferner Folgendes umfasst:
wenn die erste Steuereinheit fehlerhaft ist, Steuern des Hilfsbremsteilsystem (200) unter Verwendung der zweiten Steuereinheit, um den Druck einzustellen.

7. Steuerungsvorrichtung (620) für ein Bremssystem (300), wobei das Bremssystem (300) ein primäres Bremsteilsystem (100) und ein Hilfsbremsteilsystem (200) umfasst, das primäre Bremsteilsystem (100) durch eine erste Steuereinheit gesteuert wird und die Vorrichtung Folgendes umfasst:
eine Erlangungseinheit, die dazu konfiguriert ist, einen Arbeitsstatus der ersten Steuereinheit und des primären Bremsteilsystems (100) zu erlangen; und
eine Verarbeitungseinheit, die dazu konfiguriert ist: wenn der Arbeitsstatus anzeigt, dass die erste Steuereinheit normal arbeitet und eine Vorrichtung in dem primären Bremsteilsystem (100) fehlerhaft ist, eine andere Vorrichtung als der fehlerhaften Vorrichtung in dem primären Bremsteilsystem (100) unter Verwendung der ersten Steuereinheit zu steuern, um den Druck von Bremsfluid in einem Bremsradzylinder (17, 18, 19, 20) einzustellen,
**dadurch gekennzeichnet, dass** das Bremssystem (300) einen aktiven Bremsmodus umfasst;
das primäre Bremsteilsystem (100) einen ersten Sensor (154) umfasst, und der erste Sensor (154) dazu konfiguriert ist, Informationen über Bremskraftanforderungen eines Fahrers zu erlangen, wenn sich das Bremssystem (300) in dem aktiven Bremsmodus befindet;
die Verarbeitungseinheit ferner dazu konfiguriert ist:
Informationen über Bremskraftanforderungen basierend auf einem Betriebsstatus und/oder Umgebungsinformationen eines Fahrzeugs zu bestimmen; und
die Verarbeitungseinheit dazu konfiguriert ist:
wenn der Arbeitsstatus anzeigt, dass der erste Sensor (154) fehlerhaft ist, eine andere Vorrichtung als den ersten Sensor (154) in dem primären Bremsteilsystem (100) basierend auf den Informationen über Bremskraftanforderungen unter Verwendung der ersten Steuereinheit zu steuern, um den Druck einzustellen.

8. Vorrichtung (620) nach Anspruch 7, wobei
das Bremssystem (300) einen Fahrerbremsmodus umfasst;
das primäre Bremsteilsystem (100) einen ersten Sensor (154) umfasst, das Hilfsbremsteilsystem (200) einen zweiten Sensor umfasst, und der erste Sensor (154) und der zweite Sensor dazu konfiguriert sind, Informationen über Bremskraftanforderungen eines Fahrers zu erlangen; und
die Verarbeitungseinheit dazu konfiguriert ist:
Informationen über eine Bremskraft basierend auf Informationen über Bremskraftanforderungen, die durch den zweiten Sensor erlangt werden, zu bestimmen, wenn sich das Bremssystem (300) in dem Fahrerbremsmodus befindet; und
wenn der Arbeitsstatus anzeigt, dass der erste Sensor (154) fehlerhaft ist, eine andere Vorrichtung als den ersten Sensor (154) in dem primären Bremsteilsystem (100) basierend auf den Informationen über die Bremskraft unter Verwendung der ersten Steuereinheit zu steuern, um den Druck einzustellen.

9. Vorrichtung (620) nach einem der Ansprüche 7 bis 8, wobei das primäre Bremsteilsystem (100) ein primäres Druckerhöhungsmodul (130), ein Fluideinlassventil und ein Fluidauslassventil umfasst;
das primäre Druckerhöhungsmodul (130) dazu konfiguriert ist, den Druck von Bremsfluid in einem ersten Leitungsabschnitt einzustellen, der erste Leitungsabschnitt eine Bremsleitung zwischen dem primären Druckerhöhungsmodul (130) und dem Fluideinlassventil ist, und, wenn sich das Fluideinlassventil in einem Ein-Zustand befindet, der erste Leitungsabschnitt mit dem Bremsradzylinder (17, 18, 19, 20) in Verbindung steht;
das Hilfsbremsteilsystem (200) ein Hilfsdruckerhöhungsmodul (160) umfasst, und das Hilfsdruckerhöhungsmodul (160) dazu konfiguriert ist, den Druck des Bremsfluids in dem ersten Leitungsabschnitt einzustellen; und
die Verarbeitungseinheit dazu konfiguriert ist:
wenn der Arbeitsstatus anzeigt, dass das primäre Druckerhöhungsmodul (130) fehlerhaft ist, den Druck des Bremsfluids in dem ersten Leitungsabschnitt unter Verwendung des Hilfsdruckerhöhungsmoduls (160) einzustellen und das FluidEinlassventil und/oder das Fluid-Auslassventil unter Verwendung der ersten Steuereinheit zu steuern, um den Druck einzustellen.

10. Vorrichtung (620) nach Anspruch 9, wobei das primäre Druckerhöhungsmodul (130) eine primäre Druckversorgungsvorrichtung, ein erstes Steuerventil und einen dritten Sensor umfasst;
das erste Steuerventil dazu konfiguriert ist, die primäre Druckversorgungsvorrichtung mit dem ersten Leitungsabschnitt zu verbinden;
das primäre Druckerhöhungsmodul (130) den Druck des Bremsfluids in dem ersten Leitungsabschnitt unter Verwendung der primären Druckversorgungsvorrichtung einstellt;
der dritte Sensor dazu konfiguriert ist, einen Betriebsstatus der primären Druckversorgungsvorrichtung zu erfassen; und
der Umstand, dass der Arbeitsstatus anzeigt, dass das primäre Druckerhöhungsmodul (130) fehlerhaft ist, Folgendes umfasst: der Arbeitsstatus zeigt an, dass mindestens eine der primären Druckversorgungsvorrichtung, des ersten Steuerventils oder des dritten Sensors fehlerhaft ist.

11. Vorrichtung (620) nach einem der Ansprüche 7 bis 8, wobei das primäre Bremsteilsystem (100) ein primäres Druckerhöhungsmodul (130), ein Fluideinlassventil und ein Fluidauslassventil umfasst;
das primäre Druckerhöhungsmodul (130) dazu konfiguriert ist, den Druck von Bremsfluid in einem ersten Leitungsabschnitt einzustellen, der erste Leitungsabschnitt eine Bremsleitung zwischen dem primären Druckerhöhungsmodul (130) und dem Fluideinlassventil ist, und, wenn sich das Fluideinlassventil in einem Ein-Zustand befindet, der erste Leitungsabschnitt mit dem Bremsradzylinder (17, 18, 19, 20) in Verbindung steht; und die Verarbeitungseinheit dazu konfiguriert ist:
wenn der Arbeitsstatus anzeigt, dass das Fluideinlassventil fehlerhaft ist und sich das Fluideinlassventil in dem Ein-Zustand befindet, und/oder das Fluid-Auslassventil fehlerhaft ist und sich das Fluid-Auslassventil in einem Aus-Zustand befindet, das primäre Druckerhöhungsmodul (130) unter Verwendung der ersten Steuereinheit zu steuern, um den Druck einzustellen.

12. Vorrichtung (620) nach Anspruch 7, wobei
sich das Bremssystem (300) in einem aktiven Bremsmodus befindet; das primäre Bremsteilsystem (100) ein Pedalgefühl-Simulationsmodul (151) umfasst, und das Pedalgefühl-Simulationsmodul (151) dazu konfiguriert ist, ein Pedalgefühl für einen Fahrer bereitzustellen;
die Verarbeitungseinheit ferner dazu konfiguriert ist:
Informationen über Bremskraftanforderungen basierend auf einem Betriebsstatus und/oder Umgebungsinformationen eines Fahrzeugs zu bestimmen; und
die Verarbeitungseinheit dazu konfiguriert ist:
wenn der Arbeitsstatus anzeigt, dass das Pedalgefühl-Simulationsmodul (151) fehlerhaft ist, eine andere Vorrichtung als das Pedalgefühl-Simulationsmodul (151) in dem primären Bremsteilsystem (100) basierend auf den Informationen über Bremskraftanforderungen unter Verwendung der ersten Steuereinheit zu steuern, um den Druck einzustellen.

13. Steuervorrichtung (1000), umfassend:
einen Speicher (1030), der dazu konfiguriert ist, ein Computerprogramm zu speichern; und
einen Prozessor (1020), der dazu konfiguriert ist, das in dem Speicher gespeicherte Computerprogramm auszuführen, um die Vorrichtung (1000) in die Lage zu versetzen, das Verfahren nach einem der Ansprüche 1 bis 6 durchzuführen.

14. Fahrzeug, umfassend die Steuervorrichtung (620) nach einem der Ansprüche 7 bis 13.

15. Computerlesbares Speichermedium, wobei das computerlesbare Speichermedium ein Computerprogramm speichert, und, wenn das Computerprogramm durch einen Computer ausgeführt wird, das Steuerverfahren nach einem der Ansprüche 1 bis 6 implementiert wird.

## Revendications

1. Procédé de commande d'un système de freinage (300), dans lequel le système de freinage (300) comprend un sous-système de freinage primaire (100) et un sous-système de freinage auxiliaire (200), le sous-système de freinage primaire (100) est commandé par une première unité de commande, et le procédé comprend :
l'obtention (S410) d'un état de fonctionnement de la première unité de commande et du sous-système de freinage primaire (100) ; et
lorsque l'état de fonctionnement indique que la première unité de commande fonctionne normalement et qu'un appareil du sous-système de freinage primaire (100) est défectueux, la commande (S420), à l'aide de la première unité de commande, d'un appareil autre que l'appareil défectueux du sous-système de freinage primaire (100) afin de régler la pression du liquide de frein dans un cylindre de roue de frein (17, 18, 19, 20) ;
dans lequel
le sous-système de freinage primaire (100) comprend un premier capteur (154), et le premier capteur (154) est configuré pour obtenir des informations relatives à la force de freinage requise par un conducteur ;
**caractérisé en ce que** le système de freinage (300) est en mode de freinage actif, et
**en ce que** le procédé comprend en outre :
la détermination des informations relatives à la force de freinage requise sur la base de l'état de fonctionnement et/ou des informations d'environnement autour d'un véhicule ; et
la commande (S420), à l'aide de la première unité de commande, d'un appareil autre que l'appareil défectueux du sous-système de freinage primaire (100) afin de régler la pression du liquide de frein dans un cylindre de roue de frein (17, 18, 19, 20) comprend :
lorsque l'état de fonctionnement indique que le premier capteur (154) est défectueux, la commande, sur la base des informations relatives à la force de freinage requise, à l'aide de la première unité de commande, d'un appareil autre que le premier capteur (154) dans le sous-système de freinage primaire (100) afin de régler la pression.

2. Procédé selon la revendication 1, dans lequel le sous-système de freinage primaire (100) comprend un module d'augmentation de pression primaire (130), une vanne d'entrée de fluide et une vanne de sortie de fluide ;
le module d'augmentation de pression primaire (130) est configuré pour régler la pression du liquide de frein dans une première section de tuyau, la première section de tuyau est un tuyau de frein entre le module d'augmentation de pression primaire (130) et la vanne d'entrée de fluide, et lorsque la vanne d'entrée de fluide est à l'état activé, la première section de tuyau communique avec le cylindre de roue de frein (17, 18, 19, 20) ;
le sous-système de freinage auxiliaire (200) comprend un module auxiliaire d'augmentation de pression (160), et le module auxiliaire d'augmentation de pression (160) est configuré pour régler la pression du liquide de frein dans la première section de tuyau ; et
la commande (S420), à l'aide de la première unité de commande, d'un appareil autre que l'appareil défectueux du sous-système de freinage primaire (100) afin de régler la pression du liquide de frein dans un cylindre de roue de frein (17, 18, 19, 20) comprend :
lorsque l'état de fonctionnement indique que le module d'augmentation de pression primaire (130) est défectueux, le réglage de la pression du liquide de frein dans la première section de tuyau à l'aide du module d'augmentation de pression auxiliaire (160) et la commande, à l'aide de la première unité de commande, de la vanne d'entrée de fluide et/ou de la vanne de sortie de fluide afin de régler la pression.

3. Procédé selon la revendication 2, dans lequel le module d'augmentation de pression primaire (130) comprend un appareil d'alimentation en pression primaire, une première vanne de commande et un troisième capteur ;
la première vanne de commande est configurée pour relier l'appareil d'alimentation en pression primaire à la première section de tuyau ;
le module d'augmentation de pression primaire (130) règle la pression du liquide de frein dans la première section de tuyau à l'aide de l'appareil d'alimentation en pression primaire ;
le troisième capteur est configuré pour détecter un état de fonctionnement de l'appareil d'alimentation en pression principal ; et
le fait que l'état de fonctionnement indique que le module d'augmentation de pression primaire (130) est défectueux comprend : l'état de fonctionnement indique qu'au moins l'un des appareils d'alimentation en pression primaire, de la première vanne de commande et du troisième capteur est défectueux.

4. Procédé selon la revendication 1, dans lequel le sous-système de freinage primaire (100) comprend un module d'augmentation de pression primaire (130), une vanne d'entrée de fluide et une vanne de sortie de fluide ;
le module d'augmentation de pression primaire (130) est configuré pour régler la pression du liquide de frein dans une première section de tuyau, la première section de tuyau est un tuyau de frein entre le module d'augmentation de pression primaire (130) et la vanne d'entrée de fluide, et lorsque la vanne d'entrée de fluide est à l'état actif, la première section de tuyau communique avec le cylindre de roue de frein (17, 18, 19, 20) ; et
la commande (S420), à l'aide de la première unité de commande, d'un appareil autre que l'appareil défectueux du sous-système de freinage primaire (100) afin de régler la pression du liquide de frein dans un cylindre de roue de frein (17, 18, 19, 20) comprend :
lorsque l'état de fonctionnement indique que la vanne d'entrée de fluide est défectueuse et que la vanne d'entrée de fluide est à l'état activé, et/ou que la vanne de sortie de fluide est défectueuse et que la vanne de sortie de fluide est à l'état désactivé, la commande, à l'aide de la première unité de commande, du module d'augmentation de pression primaire (130) afin de régler la pression.

5. Procédé selon la revendication 1, dans lequel
le système de freinage (300) est en mode de freinage actif ;
le sous-système de freinage primaire (100) comprend un module de simulation de sensation de pédale, et le module de simulation de sensation de pédale (151) est configuré pour fournir une sensation de pédale à un conducteur ;
le procédé comprend en outre :
la détermination des informations relatives à la force de freinage requise sur la base de l'état de fonctionnement et/ou des informations d'environnement autour d'un véhicule ; et
la commande (S420), à l'aide de la première unité de commande, d'un appareil autre que l'appareil défectueux du sous-système de freinage primaire (100) afin de régler la pression du liquide de frein dans un cylindre de roue de frein (17, 18, 19, 20) comprend :
lorsque l'état de fonctionnement indique que le module de simulation de sensation de pédale (151) est défectueux, la commande, sur la base des informations relatives à la force de freinage requise à l'aide de la première unité de commande, d'un appareil autre que le module de simulation de sensation de pédale (151) dans le sous-système de freinage primaire (100) afin de régler la pression.

6. Procédé selon l'une quelconque des revendications 1 à 5, dans lequel le sous-système de freinage auxiliaire (200) est commandé par une seconde unité de commande, et le procédé comprend en outre :
lorsque la première unité de commande est défectueuse, la commande, à l'aide de la seconde unité de commande, du sous-système de freinage auxiliaire (200) afin de régler la pression.

7. Appareil de commande (620) d'un système de freinage (300), dans lequel le système de freinage (300) comprend un sous-système de freinage primaire (100) et un sous-système de freinage auxiliaire (200), le sous-système de freinage primaire (100) est commandé par une première unité de commande, et l'appareil comprend :
une unité d'obtention, configurée pour obtenir un état de fonctionnement de la première unité de commande et du sous-système de freinage primaire (100) ; et
une unité de traitement, configuré pour : lorsque l'état de fonctionnement indique que la première unité de commande fonctionne normalement et qu'un appareil du sous-système de freinage primaire (100) est défectueux, commander, à l'aide de la première unité de commande, un appareil autre que l'appareil défectueux du sous-système de freinage primaire (100) afin de régler la pression du liquide de frein dans un cylindre de roue de frein (17, 18, 19, 20) ,
**caractérisé en ce que** le système de freinage (300) comprend un mode de freinage actif ;
le sous-système de freinage primaire (100) comprend un premier capteur (154), et le premier capteur (154) est configuré pour obtenir des informations relatives à la force de freinage requise d'un conducteur lorsque le système de freinage (300) est en mode de freinage actif ;
l'unité de traitement est en outre configurée pour :
déterminer des informations relatives à la force de freinage requise sur la base d'un état de fonctionnement et/ou des informations d'environnement autour d'un véhicule ; et
l'unité de traitement est configurée pour :
lorsque l'état de fonctionnement indique que le premier capteur (154) est défectueux, commander, sur la base des informations relatives à la force de freinage requise à l'aide de la première unité de commande, un appareil autre que le premier capteur (154) dans le sous-système de freinage primaire (100) afin de régler la pression.

8. Appareil (620) selon la revendication 7, dans lequel le système de freinage (300) comprend un mode de freinage du conducteur ;
le sous-système de freinage primaire (100) comprend un premier capteur (154), le sous-système de freinage auxiliaire (200) comprend un deuxième capteur, et le premier capteur (154) et le deuxième capteur sont configurés pour obtenir des informations relatives à la force de freinage requise par un conducteur ; et l'unité de traitement est configurée pour :
déterminer des informations concernant une force de freinage sur la base des informations relatives à la force de freinage requise obtenues par le deuxième capteur lorsque le système de freinage (300) est en mode de freinage du conducteur ; et
lorsque l'état de fonctionnement indique que le premier capteur (154) est défectueux, commander, sur la base des informations concernant la force de freinage à l'aide de la première unité de commande, un appareil autre que le premier capteur (154) dans le sous-système de freinage primaire (100) afin de régler la pression.

9. Appareil (620) selon l'une quelconque des revendications 7 et 8, dans lequel
le sous-système de freinage primaire (100) comprend un module d'augmentation de pression primaire (130), une vanne d'entrée de fluide et une vanne de sortie de fluide ;
le module d'augmentation de pression primaire (130) est configuré pour régler la pression du liquide de frein dans une première section de tuyau, la première section de tuyau est un tuyau de frein entre le module d'augmentation de pression primaire (130) et la vanne d'entrée de fluide, et lorsque la vanne d'entrée de fluide est à l'état activé, la première section de tuyau communique avec le cylindre de roue de frein (17, 18, 19, 20) ;
le sous-système de freinage auxiliaire (200) comprend un module auxiliaire d'augmentation de pression (160), et le module auxiliaire d'augmentation de pression (160) est configuré pour régler la pression du liquide de frein dans la première section de tuyau ; et
l'unité de traitement est configurée pour :
lorsque l'état de fonctionnement indique que le module d'augmentation de pression primaire (130) est défectueux, régler la pression du liquide de frein dans la première section de tuyau à l'aide du module d'augmentation de pression auxiliaire (160) et commander, à l'aide de la première unité de commande, la vanne d'entrée de fluide et/ou la vanne de sortie de fluide afin de régler la pression.

10. Appareil (620) selon la revendication 9, dans lequel le module d'augmentation de pression primaire (130) comprend un appareil d'alimentation en pression primaire, une première vanne de commande et un troisième capteur ;
la première vanne de commande est configurée pour relier l'appareil d'alimentation en pression primaire à la première section de tuyau ;
le module d'augmentation de pression primaire (130) règle la pression du liquide de frein dans la première section de tuyau à l'aide de l'appareil d'alimentation en pression primaire ;
le troisième capteur est configuré pour détecter un état de fonctionnement de l'appareil d'alimentation en pression principal ; et
le fait que l'état de fonctionnement indique que le module d'augmentation de pression primaire (130) est défectueux comprend : l'état de fonctionnement indique qu'au moins l'un des appareils d'alimentation en pression primaire, de la première vanne de commande et du troisième capteur est défectueux.

11. Appareil (620) selon l'une quelconque des revendications 7 et 8, dans lequel
le sous-système de freinage primaire (100) comprend un module d'augmentation de pression primaire (130), une vanne d'entrée de fluide et une vanne de sortie de fluide ;
le module d'augmentation de pression primaire (130) est configuré pour régler la pression du liquide de frein dans une première section de tuyau, la première section de tuyau est un tuyau de frein entre le module d'augmentation de pression primaire (130) et la vanne d'entrée de fluide, et lorsque la vanne d'entrée de fluide est à l'état actif, la première section de tuyau communique avec le cylindre de roue de frein (17, 18, 19, 20) ; et
l'unité de traitement est configurée pour :
lorsque l'état de fonctionnement indique que la vanne d'entrée de fluide est défectueuse et que la vanne d'entrée de fluide est à l'état activé, et/ou que la vanne de sortie de fluide est défectueuse et que la vanne de sortie de fluide est à l'état désactivé, commander, à l'aide de la première unité de commande, le module d'augmentation de pression primaire (130) afin régler la pression.

12. Appareil (620) selon la revendication 7, dans lequel le système de freinage (300) est en mode de freinage actif ; le sous-système de freinage primaire (100) comprend un module de simulation de sensation de pédale (151), et le module de simulation de sensation de pédale (151) est configuré pour fournir une sensation de pédale à un conducteur ;
l'unité de traitement est en outre configurée pour :
déterminer des informations relatives à la force de freinage requise sur la base d'un état de fonctionnement et/ou des informations d'environnement autour d'un véhicule ; et
l'unité de traitement est configurée pour :
lorsque l'état de fonctionnement indique que le module de simulation de sensation de pédale (151) est défectueux, commander, sur la base des informations relatives à la force de freinage requise à l'aide de la première unité de commande, un appareil autre que le module de simulation de sensation de pédale (151) dans le sous-système de freinage primaire (100) afin de régler la pression.

13. Appareil de commande (1000), comprenant :
une mémoire (1030), configurée pour stocker un programme informatique ; et
un processeur (1020) configuré pour exécuter le programme informatique stocké dans la mémoire, afin de permettre à l'appareil (1000) de réaliser le procédé selon l'une quelconque des revendications 1 à 6.

14. Véhicule, comprenant l'appareil de commande (620) selon l'une quelconque des revendications 7 à 13.

15. Support de stockage lisible par ordinateur, dans lequel le support de stockage lisible par ordinateur stocke un programme informatique, et lorsque le programme informatique est exécuté par un ordinateur, le procédé de commande selon l'une quelconque des revendications 1 à 6 est mis en œuvre.
